(19) Europäisches Patentamt
European Patent Office
Office européen des brevets

(11) EP 3 018 162 B1

(12) **EUROPEAN PATENT SPECIFICATION**

(45) Date of publication and mention of the grant of the patent:
**30.01.2019 Bulletin 2019/05**

(51) Int Cl.:
***C08G 64/02*** (2006.01) ***C08G 63/64*** (2006.01)

(21) Application number: **15199396.1**

(22) Date of filing: **18.04.2013**

(54) **COPOLYCARBONATE**

COPOLYCARBONAT

COPOLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2012 JP 2012094767**
**13.06.2012 JP 2012133901**
**12.09.2012 JP 2012200618**
**05.02.2013 JP 2013020494**

(43) Date of publication of application:
**11.05.2016 Bulletin 2016/19**

(62) Document number(s) of the earlier application(s) in accordance with Art. 76 EPC:
**13778636.4 / 2 840 102**

(73) Proprietor: **TEIJIN LIMITED**
**Osaka-shi,**
**Osaka 541-0054 (JP)**

(72) Inventors:
- **MOTOYOSHI, Tetsuya**
  **Chiyoda-ku, Tokyo 100-0013 (JP)**
- **IMAZATO, Kenta**
  **Chiyoda-ku, Tokyo 100-0013 (JP)**
- **YAMANAKA, Katsuhiro**
  **Chiyoda-ku, Tokyo 100-0013 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 1 752 482**
**JP-A- 2003 292 603**
**JP-A- 2011 105 846**
**US-A1- 2009 105 393**

EP 3 018 162 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a copolycarbonate which has a low water absorption coefficient and is excellent in heat resistance, low-temperature characteristics and surface hardness.

BACKGROUND ART

Biomass resources which do not depend on oil as a raw material and realize carbon neutral that they do not increase the amount of carbon dioxide even when they are burnt are attracting a lot of attention due to problems such as concerns over the depletion of oil resources and an increase in the amount of carbon dioxide in air which causes global warming. In the field of polymers, the development of biomass plastics produced from the biomass resources is now actively under way.

A typical example of the biomass plastics is polylactic acid. The polylactic acid has relatively high heat resistance and mechanical properties among the biomass plastics. Therefore, its use is spreading to dishes, packaging materials and miscellaneous goods, and further the potential of using it as an industrial material is now under study.

However, for use of the polylactic acid as an industrial material, its heat resistance is unsatisfactory and when a molded article thereof is to be obtained by injection molding having high productivity, it is inferior in moldability as its crystallinity is low as a crystalline polymer.

A polycarbonate which is produced from a raw material obtained from an ether diol residue able to be produced from sugar is under study as an amorphous polycarbonate obtained from a biomass resource and having high heat resistance. Especially, studies are being made to use isosorbide as a monomer so as to incorporate it into a polycarbonate.

There is proposed a copolycarbonate having excellent heat resistance and moldability which is prepared by copolymerizing isosorbide with an aliphatic diol (Patent Document 1 and Patent Document 2). However, since 1,3-propanediol, 1,4-butaneidol, 1,6-hexanediol or alicyclic diol is used as the aliphatic diol in this copolycarbonate, there is limitation to use of the copolycarbonate in cold districts due to physical properties at a low temperature, for example, low impact strength. Further, since this copolycarbonate has a high water absorption coefficient, a dimensional change or warp occurs in a molded article thereof by water absorption.

There is also proposed a copolycarbonate obtained from isosorbide and 1,8-octanediol (Patent Document 3) . However, this copolycarbonate has a low glass transition temperature of 68°C. Therefore, the development of a copolycarbonate which is obtained from a biomass resource and excellent in heat resistance, low-temperature characteristics, low water absorption and surface hardness is desired.

Meanwhile, there are proposed polyesters of isosorbide and a dicarboxylic acid. Only polyesters having an extremely low content of isosorbide and a low molecular weight are obtained (Patent Documents 4 and 5). Although there is proposed a copolymer of isosorbide and polylactic acid, it has low heat resistance. This copolymer has low productivity as polymers obtained by polymerizing isosorbide and lactic acid independently are reacted with each other by using a solvent (Patent Document 6).

JP 2011 105846 A relates to the problem to provide a polycarbonate resin composition including at least a structural unit derived from a dihydroxy compound such as isosorbide and having good heat resistance, transparency, mechanical strength and excellent moldability; and a molded article thereof. As a solution to the problem, the document describes a polycarbonate resin composition which includes 100 parts by weight of a polycarbonate resin comprising a structural unit derived from a dihydroxy compound having a site represented by the following general formula (1), 0.0001-2 parts by weight of at least one mold release agent selected from the group consisting of a higher fatty acid and stearic acid ester, excluding that having a moiety represented by formula (1) which is a part of $-CH_2-O-H$.

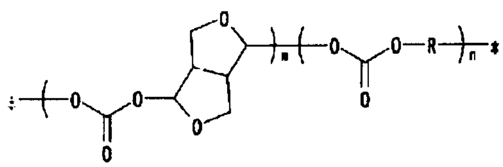

(1)

EP 1 752 482 A1 relates to the problem to provide an aliphatic polyester copolymer which is excellent in heat resistance while having practically adequate mechanical properties and properties in a molten state thereof. As a solution to the problem, the document describes an aliphatic polyester copolymer comprising an aliphatic carbonate unit and an aliphatic polyester unit, and a molded body composed of said aliphatic polyester copolymer.

US 2009/105393 A1 describes an isosorbide-based polycarbonate polymer comprising: an isosorbide unit, an aliphatic unit derived from a $C_{14-44}$ aliphatic diacid, $C_{14-44}$ aliphatic diol, or combination of these; and optionally, an additional unit different from the isosorbide and aliphatic units, wherein the isosorbide unit, aliphatic unit, and additional unit are each carbonate, or a combination of carbonate and ester units. Also disclosed are a thermoplastic composition and an article comprising the isosorbide-based polycarbonate.

Prior Art Documents

(Patent Document 1) WO2004/111106
(Patent Document 2) JP-A 2008-24919
(Patent Document 3) JP-A 2003-292603
(Patent Document 4) JP-B 2002-512268
(Patent Document 5) JP-A 2001-180591
(Patent Document 6) WO2005/116110

DISCLOSURE OF THE INVENTION

It is an object of the present invention to provide a copolycarbonate which has a low water absorption coefficient and is excellent in heat resistance, low-temperature characteristics and surface hardness.

The inventors of the present invention found that when isosorbide is copolymerized with a long-chain diol having 8 to 12 carbon atoms, a polycarbonate oligomer or a polyester diol, a copolycarbonate which has a low water absorption coefficient and is excellent in heat resistance, low-temperature characteristics and surface hardness is obtained. The present invention was accomplished based on this finding.

That is, the present invention is a copolycarbonate (Z) which contains a unit (A) represented by the following formula and a unit (B) represented by the following formula as main recurring unit, the ($A/B_{n=1}$) molar ratio of the unit (A) and the unit ($B_{n-1}$) being 40/60 to 99/1. The unit ($B_{n=1}$) is a single unit constituting a block.

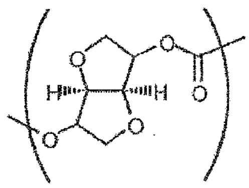

(A)

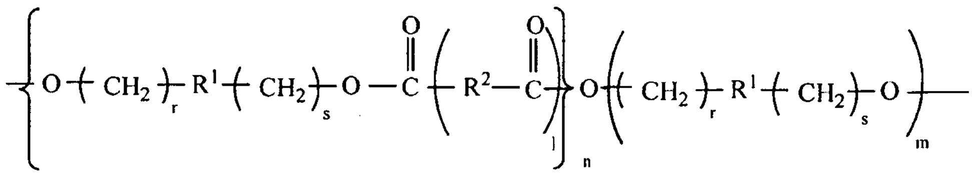

(B)

($R^1$ is an alkylene group or cycloalkylene group, all of which may be substituted by an aromatic group having 6 to 12 carbon atoms. $R^2$ is an alkylene group, cycloalkylene group or arylene group, all of which may be substituted by an aromatic group having 6 to 12 carbon atoms. "r" and "s" are each independently an integer of 0 to 4. "l" is 0, "m" is 0, "n" is an integer of 2 to 100, or "l" is 1, "m" is 1 and "n" is an integer of 1 to 100.)

BEST MODE FOR CARRYING OUT THE INVENTION

The present invention will be described in detail hereinunder.

<copolycarbonate (Z)>

The copolycarbonate (Z) contains a unit represented by the following formula (A) and a unit (B) represented by the following formula as main recurring units, and the ($A/B_{n=1}$) molar ratio of the unit (A) and the unit ($B_{n-1}$) is 40/60 to 99/1. The unit ($B_{n-1}$) is a single unit constituting a block.

(unit (A))

The unit (A) is derived from an aliphatic diol having an ether group. A polycarbonate containing the unit (A) has excellent heat resistance and high pencil hardness. Examples of the unit (A) include units (A1), (A2) and (A3) which are represented by the following formulas and stereoisomeric to one another.

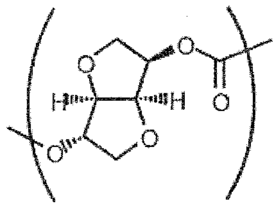

(A 1)

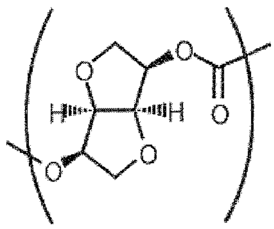

(A 2)

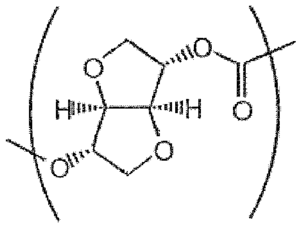

(A 3)

The units (A1), (A2) and (A3) are units derived from sugar-derived ether diols, obtained from the biomass of the natural world and called "renewable resources". The units (A1), (A2) and (A3) are derived from isosorbide, isommanide and isoidide, respectively. Isosorbide is obtained by hydrogenating D-glucose obtained from starch and dehydrating the obtained product. The other ether diols are obtained from similar reactions to the above reaction except for the starting material. The unit (A1) derived from isosorbide (1,4:3,6-dianhydro-D-sorbitol) out of isosorbide, isomannide and isoidide is particularly preferred because it is easily produced and has excellent heat resistance.

(unit (B))

The unit (B) is represented by the following formula.

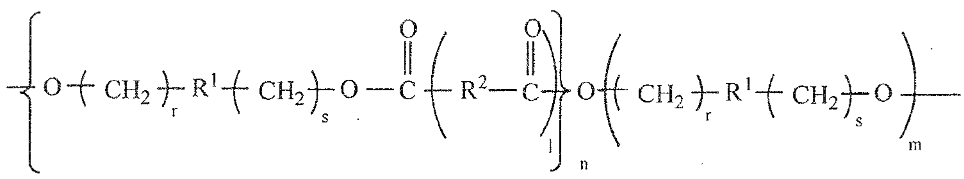

(B)

In the above formula, $R^1$ is an alkylene group or cycloalkylene group, all of which may be substituted by an aromatic group having 6 to 12 carbon atoms.

The number of carbon atoms of the alkylene group is preferably 2 to 30, more preferably 3 to 20, much more preferably 3 to 10. Examples of the alkylene group include ethylene group, trimethylene group, tetramethylene group, pentamethylene group, hexamethylene group, heptamethylene group, octamethylene group, nonamethylene group, decamethylene group, undecamethylene group and dodecamethylene group. Examples of the aromatic group having 6 to 12 carbon atoms as the substituent include phenyl group and tolyl group.

The number of carbon atoms of the cycloalkylene group is preferably 6 to 30, more preferably 6 to 20. Examples of the cycloalkylene group include cyclohexylene group, cycloheptylene group, cyclooctylene group, cyclononylene group, cyclodecamethylene group, cycloundecylene group and cyclododecylene group. Examples of the aromatic group having 6 to 12 carbon atoms as the substituent include phenyl group and tolyl group.

$R^2$ is an alkylene group, cycloalkylene group or arylene group, all of which may be substituted by an aromatic group having 6 to 12 carbon atoms.

The number of carbon atoms of the alkylene group is preferably 2 to 30, more preferably 3 to 20, much more preferably 3 to 10. Examples of the alkylene group include ethylene group, trimethylene group, tetramethylene group, pentamethylene group, hexamethylene group, heptamethylene group, octamethylene group, nonamethylene group, decamethylene group, undecamethylene group and dodecamethylene group. Examples of the aromatic group having 6 to 12 carbon atoms as the substituent include phenyl group and tolyl group.

The number of carbon atoms of the cycloalkylene group is preferably 6 to 30, more preferably 6 to 20. Examples of the cycloalkylene group include cyclohexylene group, cycloheptylene group, cyclooctylene group, cyclononylene group, cyclodecamethylene group, cycloundecylene group and cyclododecylene group. Examples of the aromatic group having 6 to 12 carbon atoms as the substituent include phenyl group and tolyl group.

Examples of the arylene group include phenylene group and naphthalenediyl group.

"r" and "s" are each independently an integer of 0 to 4. "l" is 0, "m" is 0, "n" is an integer of 2 to 100, or "l" is 1, "m" is 1, "n" is an integer of 1 to 100, preferably 1 to 50, more preferably 1 to 20.

Examples of the copolycarbonate (Z) include the following copolycarbonates (2) and (3). The following copolycarbonate (1) is described only for reference and/or comparison.

<copolycarbonate (1): random polymer>

The copolycarbonate (1) is a random polymer in which "l" is 0, "m" is 0, "n" is 1, "r" is 0 and "s" is 0 in the unit (B) of the copolycarbonate (Z).

The inventors found that when a monomer having a long-chain diol with 8 to 12 carbon atoms is used as a monomer to be copolymerized with isosorbide, a copolycarbonate having a low water absorption coefficient and excellent low-temperature impact characteristics is obtained.

The copolycarbonate (1) contains a unit (A) represented by the following formula and a unit (B1) represented by the following formula as main recurring units, and the (A/B1) molar ratio of the unit (A) and the unit (B1) is 80/20 to 95/5.

(unit (A))

The unit (A) is represented by the following formula as described above.

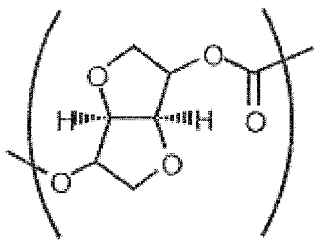

(A)

(unit (B1))

The unit (B1) is represented by the following formula.

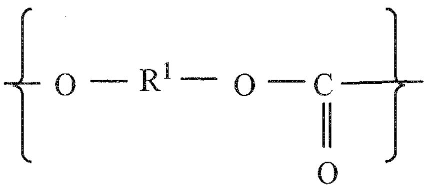

(B1)

In the above formula, $R^1$ is an alkylene group having 8 to 12 carbon atoms, which may be substituted by an aromatic group having 6 to 12 carbon atoms.

Examples of the alkylene group having 8 to 12 carbon atoms include octamethylene group, nonamethylene

group, decamethylene group, undecamethylene group and dodecamethylene group. Examples of the aromatic group having 6 to 12 carbon atoms as a substitute include phenyl group and tolyl group.

The unit (B1) in the copolycarbonate (1) is derived from an aliphatic diol having 8 to 12 carbon atoms.

Examples of the aliphatic diol having 8 to 12 carbon atoms include 1,8-octanediol, 1,9-nonanediol, 1,10-decanediol, 1,12-decanediol, 2,4-dethyl-1,5-pentanediol and 2-methyl-1,8-octanediol. Out of these, 1,8-octanediol, 1,9-nonanediol, 1,10-decanediol and 1,12-dodecanediol are preferred, and 1,9-nonanediol, 1,10-decanediol and 1,12-dodecanediol are more preferred. They may be used in combination of two or more.

(composition)

The main recurring units of the copolycarbonate (1) consist of the unit (A) and the unit (B1). The expression "main" means that the total content of these units is preferably 60 mol%, more preferably 70 mol%, much more preferably 80 mol% based on the total of all the recurring units.

The (A/B1) molar ratio of the unit (A) and the unit (B1) in the copolycarbonate (1) is 80/20 to 95/5. When the molar ratio falls within this range, the copolycarbonate has high pencil hardness and heat resistance and very low water absorption. The (A/B1) molar ratio is preferably 82/18 to 93/7, more preferably 84/16 to 92/8. When the (A/B) molar ratio is lower than 80/20, heat resistance degrades and the (A/B) molar ratio is higher than 95/5, the water absorption coefficient becomes high and flowability degrades. The (A/B) molar ratio can be calculated by measuring with the proton NMR of JNM-AL400 of JEOL Ltd.

(another comonomer)

As the other comonomer may be used another aliphatic diol, alicyclic diol or aromatic dihydroxy compound, as exemplified by diol compounds, and oxyalkylene glycols such as diethylene glycol, triethylene glycol, tetraethylene glycol and polyethylene glycol described in WO2004/111106 and WO2011/021720.

Examples of the other aliphatic diol include 1,3-propanediol, 1,4-butanediol, 1,5-pentanediol, 1,6-hexanediol, 2-methyl-1,3-propanediol, neopentyl glycol and 3-methyl-1,5-pentanediol.

Examples of the alicyclic diol include 2-methyl-1,3-cyclobutanediol, 2,4-dimethyl-1,3-cyclobutanediol, 2,2,4,4-tetramethyl-1,3-cyclobutanediol, 2-ethyl-1,3-cyclobutanediol, 2,4-diethyl-1,3-cyclobutanediol, 2,2,4,4-tetraethyl-1,3-cyclobutanediol, 2-butyl-1,3-cyclobutanediol, 2,4-dibutyl-1,3-cyclobutanediol, 2,2,4,4-tetrabutyl-1,3-cyclobutanediol, 1,2-cyclohexanediol, 1,3-cyclohexanediol, 1,4-cyclhexanediol, cyclohexane dimethanol, tricyclodecane dimethanol, adamantane diol, pentacyclopentadecane dimethanol and 3,9-bis(2-hydroxy-1,1-dimethylethyl)-2,4,8,10-tetraoxaspiro[5.5] undecane.

Examples of the aromatic dihydroxy compound include $\alpha$,$\alpha$'-bis(4-hydroxyphenyl)-m-diisopropylbenzene (bisphenol M), 9,9-bis(4-hydroxyphenyl)fluorene, 1,1-bis(4-hydroxyphenyl)cyclohexane, 1,1-bis(4-hydroxyphenyl)-3,3,5-trimethylcyclohexane, 4,4'-dihydroxy-3,3'-dimethyldiphenyl sulfide, bisphenol A, 2,2-bis(4-hydroxy-3-methylphenyl)propane (bisphenol C), 2,2-bis(4-hydroxyphenyl)-1,1,1,3,3,3-hexafluoropropane (bisphenol AF) and 1,1-bis(4-hydroxyphenyl)decane.

<production process of copolycarbonate (1)>

The copolycarbonate (1) can be produced by reacting a diol with a carbonate precursor such as a diester carbonate.

A transesterification reaction using a diester carbonate as the carbonate precursor is carried out by stirring an aromatic dihydroxy component and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is completed while the formed alcohol or phenol is distilled off by setting a reduced pressure from the beginning. An end sealing agent and an antioxidant may be added as required.

The diester carbonate used in the above transesterification reaction is an ester such as an aryl group or aralkyl group having 6 to 12 carbon atoms which may be substituted. Specific examples thereof include diphenyl carbonate, ditolyl carbonate, bis(chlorophenyl)carbonate and m-cresyl carbonate. Out of these, diphenyl carbonate is particularly preferred. The amount of diphenyl carbonate is preferably 0.97 to 1.10 moles, more preferably 1.00 to 1.06 moles based on 1 mole of the total of the dihydroxy compounds.

To increase the polymerization rate in the melt polymerization method, a polymerization catalyst may be used. The polymerization catalyst is selected from an alkali metal compound, an alkali earth metal compound, a nitrogen-containing compound and a metal compound.

As the above compounds, organic acid salts, inorganic salts, oxides, hydroxides, hydrides, alkoxides and

quaternary ammonium hydroxides of an alkali metal or an alkali earth metal are preferably used. These compounds may be used alone or in combination.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, dibasic sodium phosphate, dibasic potassium phosphate, dibasic lithium phosphate, disodium phenylphosphate, disodium salts, dipotassium salts, dicesium salts and dilithium salts of bisphenol A, and sodium salts, potassium salts, cesium salts and lithium salts of phenol.

Examples of the alkali earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate and barium diacetate.

Examples of the nitrogen-containing compound include quaternary ammonium hydroxides having an alkyl or aryl group such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used.

Examples of the metal compound include zinc aluminum compounds, germanium compounds, organic tin compounds, antimony compounds, manganese compounds, titanium compounds and zirconium compounds. These compounds may be used alone or in combination of two or more.

The amount of the polymerization catalyst is preferably 1 x $10^{-9}$ to 1 x $10^{-2}$ equivalent, more preferably 1 x $10^{-8}$ to 1 x $10^{-5}$ equivalent, much more preferably 1 x $10^{-7}$ to 1 x $10^{-3}$ equivalent based on 1 mole of the diol component.

A catalyst deactivator may be added in the latter stage of the reaction. Known catalyst deactivators are used effectively as the catalyst deactivator. Out of these, ammonium salts and phosphonium salts of sulfonic acid are preferred. Salts of dodecylbenzenesulfonic acid such as tetrabutylphosphonium salts of dodecylbenzenesulfonic acid and salts of paratoluenesulfonic acid such as tetrabutylammonium salts of paratoluenesulfonic acid are more preferred.

As the ester of sulfonic acid, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used. Out of these, tetrabutylphosphonium salts of dodecylbenzenesulfonic acid are most preferably used.

When at least one polymerization catalyst selected from alkali metal compounds and/or alkali earth metal compounds is used, the amount of the catalyst deactivator is preferably 0.5 to 50 moles, more preferably 0.5 to 10 moles, much more preferably 0.8 to 5 moles based on 1 mole of the polymerization catalyst.

<characteristic properties of copolycarbonate (1)>

The copolycarbonate (1) satisfies the following requirements (i) to (iv);

(i) the specific viscosity measured from a 20°C methylene chloride solution should be 0.23 to 0.60;
(ii) the glass transition temperature should be 70 to 160°C;
(iii) the saturation water absorption coefficient should be not more than 2.5 %; and
(iv) the pencil hardness should be at least F.

Since the copolycarbonate (1) contains isosorbide and a long-chain diol, it has excellent heat resistance, high surface hardness, excellent low-temperature impact characteristics and a low water absorption coefficient.

(specific viscosity: $\eta_{sp}$)

The specific viscosity ($\eta_{sp}$) of the copolycarbonate (1) is 0.23 to 0.60, preferably 0.25 to 0.55, more preferably 0.30 to 0.50, much more preferably 0.35 to 0.45. When the specific viscosity is lower than 0.23, the strength of an injection molded piece degrades and when the specific viscosity is higher than 0.60, injection moldability deteriorates disadvantageously.

The specific viscosity is obtained from a solution prepared by dissolving 0.7 g of the copolycarbonate in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride and "t" is the number of seconds required for the dropping of a sample solution]

The measurement of the specific viscosity may be carried out by the following procedure. The copolycarbonate is first dissolved in methylene chloride in an amount which is 20 to 30 times the weight of the copolycarbonate, soluble matter is collected by cerite filtration, the solution is removed, and the residue is fully dried to obtain a methylene chloride-soluble solid. The specific viscosity at 20°C is obtained from a solution prepared by dissolving 0.7 g of the solid in 100 ml of methylene chloride by using an Ostwald viscometer.

(glass transition temperature: Tg)

The glass transition temperature (Tg) of the copolycarbonate (1) is 70 to 160°C, preferably 80 to 160°C, more preferably 90 to 150°C, much more preferably 100 to 140°C. When the glass transition temperature (Tg) is lower than 70°C and the copolycarbonate (1) is used as a molded product, especially an optical molded product, heat resistance becomes unsatisfactory disadvantageously. When the glass transition temperature (Tg) is higher than 160°C, injection moldability degrades disadvantageously.

The glass transition temperature (Tg) is measured at a temperature elevation rate of 20°C/min by using the 2910 DSC of TA Instruments Japan.

(saturation water absorption coefficient)

The saturation water absorption coefficient of the copolycarbonate (1) is not more than 2.5 %, preferably not more than 2.2 %, more preferably not more than 2.0 %. When the saturation water absorption coefficient is higher than 2.5 %, the deterioration of various physical properties such as a dimensional change and warpage caused by the water absorption of a molded product becomes noticeable disadvantageously.

The relationship between the glass transition temperature (Tg°C) and the water absorption coefficient (Wa%) of the copolycarbonate (1) satisfies preferably the following expression (I), more preferably the following expression (I-a). When the following expression (I) is satisfied, a copolycarbonate having excellent heat resistance and a low water absorption coefficient is obtained advantageously. Although the upper limit of the TW value is not particularly limited, a TW value of not more than 10 suffices.

$$2.5 \leqq \text{TW value} = \text{Tg} \times 0.04 - \text{Wa} \quad \text{(I)}$$

$$2.6 \leqq \text{TW value} = \text{Tg} \times 0.04 - \text{Wa} \quad \text{(I-a)}$$

(pencil hardness)

The copolycarbonate (1) has a pencil hardness of at least F. The pencil hardness is preferably at least H as the copolycarbonate is excellent in scratch resistance. The pencil hardness can be enhanced by increasing the content of the recurring unit (B1) based on the total of all the recurring units. In the present invention, the pencil hardness is such hardness that when the copolycarbonate (1) is rubbed with a pencil having specific pencil hardness, no scratch mark is left, and pencil hardness used in the surface hardness test of a film which can be measured in accordance with JIS K-5600 is used as an index. The pencil hardness becomes lower in the order of 9H, 8H, 7H, 6H, 5H, 4H, 3H, 2H, H, F, HB, B, 2B, 3B, 4B, 5B and 6B, 9H is the hardest, and 6B is the softest.

(low-temperature planar impact)

The copolycarbonate (1) is excellent in low-temperature impact resistance as the fracture morphology of low-temperature planar impact becomes ductile fracture. As for low-temperature planar impact resistance, when a 2 mm-thick square plate is used to carry out a high-speed impact test with a high-speed impact tester at a testing temperature of -20°C, a testing speed of 7 m/sec, a striker diameter of 1/2 inch and a receptor diameter of 1 inch, the probability that the fracture morphology becomes brittle fracture is preferably not more than 50 %. The probability is more preferably not more than 40 %, much more preferably not more than 30 %, particularly preferably not more than 20 %, most

preferably not more than 15 %.

The 50 % breaking energy is preferably not less than 20 J, more preferably not less than 25 J, much more preferably not less than 30 J, particularly preferably not less than 35 J. When the probability that the fracture morphology of low-temperature planar impact becomes brittle fracture is more than 50 % and when the 50 % breaking energy is less than 20 J, it may be difficult to use the copolycarbonate (1) in cold districts.

The copolycarbonate (1) preferably has a 50 % breaking energy in a -20°C falling weight impact test of not less than 20 J and a brittle fracture rate of not more than 50 %.

(dynamic viscoelasticity)

The copolycarbonate (1) has a temperature ($T_{max}$) at which tanδ for the measurement of dynamic viscoelasticity becomes the highest of preferably -73°C or lower, more preferably -78°C or lower, much more preferably -79°C or lower, most preferably -80°C or lower.

(impurities)

The content of the monohydroxy compound in the copolycarbonate (1) is preferably not more than 700 ppm, more preferably not more than 500 ppm, particularly preferably not more than 200 ppm in a reaction solution at the final outlet of a polymerization reactor. The concentration of the diester carbonate in the copolycarbonate (1) is preferably not more than 200 ppm by weight, more preferably not more than 100 ppm by weight, particularly preferably not more than 60 ppm by weight, most preferably not more than 30 ppm by weight. The amounts of these impurities can be reduced by controlling the vacuum degree of the polymerization reaction.

(others)

The copolycarbonate (1) may be mixed with additives such as a heat stabilizer, plasticizer, optical stabilizer, polymerization metal inactivating agent, flame retardant, lubricant, antistatic agent, surfactant, antibacterial agent, ultraviolet absorbent and release agent as required according to purpose. The copolycarbonate (1) may be used in combination with another resin as long as the effect of the present invention is not impaired.

<copolycarbonate (2)>

The copolycarbonate (2) is a block copolycarbonate in which "l" is 0, "m" is 0 and "n" is an integer of 2 to 100 in the unit (B) of the copolycarbonate (Z).

The inventors found that when an isosorbide-derived unit is copolymerized with a carbonate block, a copolycarbonate having a low water absorption coefficient and excellent heat resistance and high surface hardness is obtained. The present invention was accomplished based on this finding.

The copolycarbonate (2) contains a unit (A) and a unit (B2) as main recurring units, and the ($A/B2_{n=1}$) molar ratio of the unit (A) and the unit ($B2_{n=1}$) is 40/60 to 95/5. The unit ($B2_{n=1}$) is a single unit constituting a block.

(unit (A))

The unit (A) is represented by the following formula as described above.

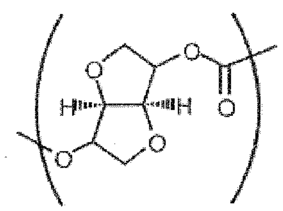

(A)

(unit (B2))

The unit (B2) is represented by the following formula.

$$\left[ O \left( CH_2 \right)_r R^1 \left( CH_2 \right)_s O - \underset{\underset{O}{\|}}{C} \right]_n \qquad (B2)$$

In the above formula, $R^1$ is an alkylene group or cycloalkylene group, all of which may be substituted by an aromatic group having 6 to 12 carbon atoms.

The number of carbon atoms of the alkylene group is preferably 2 to 30, more preferably 3 to 20, much more preferably 3 to 10. Examples of the alkylene group include ethylene group, trimethylene group, tetramethylene group, pentamethylene group, hexamethylene group, heptamethylene group, octamethylene group, nonamethylene group, decamethylene group, undecamethylene group and dodecamethylene group. Examples of the aromatic group having 6 to 12 carbon atoms as the substituent include phenyl group and tolyl group.

The number of carbon atoms of the cycloalkylene group is preferably 6 to 30, more preferably 6 to 20. Examples of the cycloalkylene group include cyclohexylene group, cycloheptylene group, cyclooctylene group, cyclononylene group, cyclodecamethylene group, cycloundecylene group and cyclododecylene group. Examples of the aromatic group having 6 to 12 carbon atoms as the substituent include phenyl group and tolyl group.

"r" and "s" are each independently an integer of 0 to 4.

"n" is an integer of 2 to 100, preferably 2 to 50, more preferably 2 to 30, particularly preferably 2 to 10.

The unit (B2) is a unit derived from a linear aliphatic diol, branched aliphatic diol or alicyclic diol.

Examples of the linear aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, hydrogenated dilinoleyl glycol and hydrogenated dioleyl glycol. Out of these, 1,3-propanediol, 1,4-butanediol, 1,6-hexanediol and 1,10-decanediol are preferred.

Examples of the branched aliphatic diol include 1,3-butylene glycol, 2-methyl-1,3-propanediol, neopentyl glycol, 2-ethyl-1,6-hexanediol, 2,2,4-trimethyl-1,6-hexanediol, 3-methyl-1,5-pentanediol, 2-n-butyl-2-ethyl-1,3-propanediol, 2,2-diethyl-1,3-propanediol, 2,4-diethyl-1,-pentanediol, 1,2-hexane glycol, 1,2-octyl glycol, 2-ethyl-1,3-hexanediol, 2,3-diisobutyl-1,3-propanediol, 2,2-diisoamyl-1,3-propanediol and 2-methyl-2-propyl-1,3-propanediol. Out of these, 3-methyl-1,5-pentanediol, 2-n-butyl-2-ethyl-1,3-propanediol, 2,2-diethyl-1,3-propanediol and 2,4-diethyl-1,5-pentanediol are preferred.

Examples of the alicyclic diol include cyclohexanediols such as 1,2-cyclohexanediol, 1,3-cyclohexanediol, 1,4-cyclohexanediol and 2-methyl-1,4-cyclohexanediol; cyclohexanedimethanols such as 1,2-cyclohexanedimethanol, 1,3-cyclohexanedimethanol and 1,4-cyclohexanedimethanol; norbornanedimethanols such as 2,3-norbornanedimethanol and 2,5-norbornanedimethanol; and tricyclodecanedimethanol, pentacyclopentadecanedimethanol, 1,3-adamantanediol, 2,2-adamantanediol, decalindimethanol, 2,2,4,4-tetramethyl-1,3-cyclobutanediol and 3,9-bis(2-hydroxy-1,1-dimethylethyl)-2,4,8,10-tetraoxaspiro[5.5]undecane. Out of these, 1,4-cyclohexanedimethanol, tricyclodecanedimethanol and 3,9-bis(2-hydroxy-1,1-dimethylethyl)-2,4,8,10-tetraoxaspiro[5.5]undecane are preferred. These aliphatic diol compounds and alicyclic diol compounds may be used alone or in combination of two or more.

(composition)

The copolycarbonate (2) contains the unit (A) and the unit (B2) as main recurring units. The expression "main" means that the total content of these units is preferably 60 mol%, more preferably 70 mol%, much more preferably 80 mol% based on the total of all the recurring units.

The ($A/B2_{n=1}$) molar ratio of the unit (A) and the unit ($B2_{n=1}$) in the copolycarbonate (2) is 40/60 to 95/5. When the ($A/B2_{n=1}$) molar ratio is 40/60 to 95/5, the obtained copolycarbonate has high pencil hardness, high heat resistance and very low water absorption.

The molar ratio of the unit (A) and the unit ($B2_{n=1}$) is preferably 60/40 to 93/7, more preferably 70/30 to 90/10. When the ($A/B2_{n=1}$) molar ratio is lower than 40/60, heat resistance degrades and when the ($A/B2_{n=1}$) molar ratio is higher than 95/5, the water absorption coefficient becomes high and flowability degrades. The ($A/B2_{n-1}$) molar ratio can be calculated by measuring with the proton NMR of JNM-AL400 of JEOL Ltd.

(another comonomer)

As the other comonomer may be used another diol or aromatic dihydroxy compound. Examples of the other diol include oxyalkylene glycols such as diethylene glycol, triethylene glycol, tetraethylene glycol and polyethylene glycol.

Examples of the aromatic dihydroxy compound include $\alpha,\alpha'$-bis(4-hydroxyphenyl)-m-diisopropylbenzene (bisphenol M), 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 4,4' -dihydroxy-3, 3' -dimethyldiphenyl sulfide, bisphenol A, 2,2-bis(4-hydroxy-3-methylphenyl)propane (bisphenol C), 2,2-bis(4-hydroxyphenyl)-1,1,1,3,3,3-hexafluoropropane (bisphenol AF) and 1,1-bis(4-hydroxyphenyl)decane.

(carbonate block)

In the copolycarbonate (2), the unit (B2) is a carbonate block. The average number (n) of repetitions of the unit (B2) is preferably 2 to 100, more preferably 2.2 to 50, much more preferably 2.3 to 30, particularly preferably 2.5 to 10.

The number average molecular weight of the unit (B2) is preferably 250 to 5,000, more preferably 300 to 3,000, much more preferably 300 to 2,000, particularly preferably 350 to 1,500.

When the average number (n) of repetitions of the unit (B2) and the number average molecular weight of the unit (B2) fall within the above ranges, water absorption, heat resistance and pencil hardness of interest become satisfactory and phase separation hardly occurs advantageously.

The block size of the unit (B2) in the copolycabronate (2) can be calculated from the carbon of a carbonate measured by $^{13}$C-NMR by dissolving the polycarbonate copolymer in $CDCl_3$. There are three signals of [unit (A) - unit (A)] at 153 to 154 ppm (since there are three stereoisomers), there are two signals of [unit (A)-unit ($B2_{n=1}$)] at 154 to 155 ppm (when there is no stereoisomer of a copolymerization diol, there are two stereoisomers of isosorbide), and the signal of [unit ($B2_{n=1}$) - unit ($B2_{n=1}$)] is generally measured at 155 to 156 ppm. An average number of repetitions of the unit (B2) can be obtained from the integrated value of the signals.

The average number of repetitions of the unit (B2) is obtained from the following equation. The number average molecular weight of the unit (B2) as a block is calculated by multiplying the average number of repetitions with the molecular weight of the recurring unit.

Average number of repetitions of unit (B2) = (integrated value of signals of ([unit($B2_{n=1}$) - unit($B2_{n=1}$)]/ integrated value of signals of [unit (A) - unit ($B2_{n=1}$)] x 2 + 1

<production process of copolycarbonate (2)>

The copolycarbonate (2) can be produced by (i) reacting a diol (x) represented by the following formula with a carbonate precursor to produce a carbonate oligomer (b2) represented by the following formula and having a number average molecular weight of 250 to 5,000, and (ii) reacting the obtained carbonate oligomer (b2) with a diol (a) represented by the following formula and a carbonate precursor.

$$HO-(CH_2)_r-R^1-(CH_2)_s-OH \qquad (x)$$

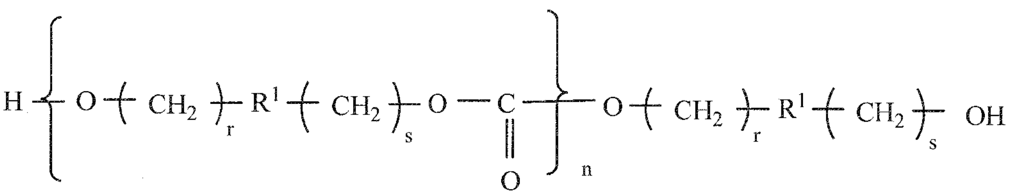

(b2)

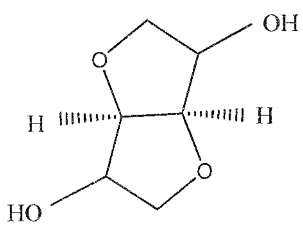

(a)

(i) Production of carbonate oligomer (b2)

The carbonate oligomer (b2) is produced by reacting a diol (x) with a carbonate precursor.

A transesterification reaction using a diester carbonate as the carbonate precursor is carried out by stirring the diol (x) and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is carried out under reduced pressure from the beginning to distill off the formed alcohol or phenol. An antioxidant may be added as required.

The diester carbonate used in the transesterification reaction is an ester such as aryl group or aralkyl group having 6 to 12 carbon atoms which may be substituted. Examples thereof include diphenyl carbonate, diethyl carbonate, dimethyl carbonate, ethylene carbonate, ditolyl carbonate, bis(chlorophenyl)carbonate and m-cresyl carbonate. Out of these, diphenyl carbonate, dimethyl carbonate and diethyl carbonate are particularly preferred.

The catalyst which can be used is a catalyst which is used for a general transesterification reaction (transesterification catalyst). The catalyst is preferably selected from an alkali metal compound, alkali earth metal compound, aluminum compound, zinc compound, manganese compound, nickel compound, antimony compound, zirconium compound, titanium compound, organic tin compound and nitrogen-containing compound.

Examples of the alkali metal compound include hydroxides of an alkali metal (such as lithium hydroxide, sodium hydroxide and potassium hydroxide), carbonates of an alkali metal (such as lithium carbonate, sodium carbonate and potassium carbonate), carboxylates of an alkali metal (such as lithium acetate, sodium acetate and potassium acetate),and alkoxides of an alkali metal (such as lithium methoxide, sodium methoxide and potassium t-butoxide), and examples of the alkali earth metal compound include hydroxides of an alkali earth metal (such as magnesium hydroxide) and alkoxides of an alkali earth metal (such as magnesium methoxide).

Examples of the nitrogen-containing compound include quaternary ammonium hydroxides having an alkyl or aryl group such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used. Examples of the aluminum compound include aluminum alkoxides (such as aluminum ethoxide, aluminum isopropoxide and aluminum sec-butoxide) and aluminum acetylacetonate.

Examples of the zinc compound include carboxylate salts of zinc (such as zinc acetate) and zinc acetylacetonate, examples of the manganese compound include carboxylate salts of manganese (such as manganese acetate) and manganese acetylacetonate, and examples of the nickel compound include carboxylate salts of nickel (such as nickel acetate) and nickel acetylacetonate.

Examples of the antimony compound include carboxylate salts of antimony (such as antimony acetate) and antimony alkoxides, and examples of the zirconium compound include zirconium alkoxides (such as zirconium propoxide and zirconium butoxide) and zirconium acetylacetonate.

Examples of the titanium compound include titanium alkoxides (such as titanium tetraethoxide, titanium tetrapropoxide, titanium tetrabutoxide, tetracyclohexyl titanate and tetrabenzyl titanate), titanate acylates (such as tributoxy titanium stearate and isopropoxy stearate), and titanate chelates (such as diisopropoxy titanium bisacetylacetonate and dihydroxy-bis(lactate)titanium). Examples of the organic tin compound include dibutyltin oxide, dibutyltin diacetate and dibutyltin dilaurate.

The carboxylate salts have preferably 2 to 30 carbon atoms, more preferably 2 to 18 carbon atoms, and the alkoxides have an alkoxy group with preferably 1 to 30 carbon atoms, more preferably 2 to 18 carbon atoms.

The above catalysts may be used alone or in combination of two or more.

Although the production of the carbonate oligomer (b2) may be carried out in the presence or absence of a catalyst, it is preferably carried out in the presence of a catalyst from the viewpoint of reaction efficiency.

The reaction temperature is preferably 90 to 230°C, more preferably 100 to 220°C, much more preferably 120 to 210°C. When the reaction temperature is higher than 230°C, the obtained carbonate oligomer may be colored and an ether structure may be produced.

Since the amount of the by-produced alcohol or phenol is relatively small in the initial stage of the reaction, a transesterification reaction is carried out at 10 kPa to normal pressure to suppress the distillation of the diester carbonate. In the closing stage of the transesterification reaction, for example, after the transesterification reaction proceeds preferably 50 % or more, more preferably 70 % or more, the transesterification reaction is desirably carried out under a reduced pressure of preferably 0.1 to 10 kPa, more preferably 0.1 to 1 kPa.

The number average molecular weight of the carbonate oligomer (b2) is preferably 250 to 5,000, more preferably 300 to 3,000, much more preferably 400 to 2,000, particularly preferably 400 to 1,500. When the number average molecular weight is lower than 250, water absorption, heat resistance and pencil hardness of interest may degrade.

When the number average molecular weight is higher than 5,000, blocking properties become too high, whereby phase separation tends to occur.

The number average molecular weight of the carbonate oligomer (b2) can be calculated by measuring proton NMR. The numbers of the terminal hydroxyl groups and the terminal phenyl groups based on the total number of the recurring units are calculated by proton NMR to calculate the number average molecular weight from the following equation.

Number average molecular weight of carbonate oligomer (b2) = (integrated value of signals of recurring unit)/integrated value of signals of terminal hydroxyl group + integrated value of signals of terminal phenyl group) x 2 x molecular weight of recurring unit

The ratio of the terminal hydroxyl group and the terminal phenyl group of the carbonate oligomer (b2) is not particularly limited and may be arbitrary.

The production of the carbonate oligomer (b2) may be carried out in the same reaction vessel as that for the production of the copolycarbonate (2) or a different reaction vessel. The carbonate oligomer (b2) may be taken out from the reaction vessel and kept before use. The carbonate oligomer (b2) may be purified by using a filter or reprecipitation. A commercially available polycarbonate diol may be used. Examples thereof include the T-5650J (diol component: 1,6-hexanediol and 1,5-pentanediol) and T-4671 and T-4672 (diol component: 1,6-hexanediol and 1,4-butanediol) of Asahi Kasei Chemicals Corporation, the UM-CARB90 (diol component: 1,6-hexanediol and 1,4-cyclohexanedimethanol) and UH-CARB200 (diol component: 1,6-hexanediol) of Ube Industries, Ltd. and the Kuraray Polyols series of Kuraray Co., Ltd.

(ii) Production of copolycarbonate (2)

The copolycarbonate (2) may be produced by reacting the carbonate oligomer (b2), the diol (a) and the carbonate precursor with one another. The reaction may be carried out by known means.

A transesterification reaction using a diester carbonate as the carbonate precursor is carried out by stirring the diol and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is completed while the formed alcohol or phenol is distilled off by setting a reduced pressure from the beginning. An end sealing agent and an antioxidant may be added as required.

The diester carbonate used in the above transesterification reaction is an ester such as an aryl group or aralkyl group having 6 to 12 carbon atoms which may be substituted. Specific examples thereof include diphenyl carbonate, ditolyl carbonate, bis(chlorophenyl)carbonate and m-cresyl carbonate. Out of these, diphenyl carbonate is particularly preferred. The amount of diphenyl carbonate is preferably 0.97 to 1.10 moles, more preferably 1.00 to 1.06 moles based on 1 mole of the total of the dihydroxy compounds.

To increase the polymerization rate in the melt polymerization method, a polymerization catalyst may be used, as exemplified by an alkali metal compound, an alkali earth metal compound, a nitrogen-containing compound and a metal compound.

As the above compounds, organic acid salts, inorganic salts, oxides, hydroxides, hydrides, alkoxides and quaternary ammonium hydroxides of an alkali metal or an alkali earth metal are preferably used, and these compounds may be used alone or in combination.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogenphosphate, dipotassium hydrogenphosphate, dilithium phosphate, disodium phenylphosphate, disodium salts, dipotassium salts, dicesium salts and dilithium salts of bisphenol A, and sodium salts, potassium salts, cesium salts and lithium salts of phenol.

Examples of the alkali earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate and barium diacetate.

Examples of the nitrogen-containing compound include quaternary ammonium hydroxides having an alkyl or aryl group such as tetramethylammonium hydroxide, tetraethylammonium hydroxide, tetrapropylammonium hydroxide,

tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used.

Examples of the metal compound include zinc aluminum compounds, germanium compounds, organic tin compounds, antimony compounds, manganese compounds, titanium compounds and zirconium compounds. These compounds may be used alone or in combination of two or more.

The amount of the polymerization catalyst is preferably 1 x $10^{-9}$ to 1 x $10^{-2}$ equivalent, more preferably 1 x $10^{-8}$ to 1 x $10^{-5}$ equivalent, particularly preferably 1 x $10^{-7}$ to 1 x $10^{-3}$ equivalent based on 1 mole of the diol component.

A catalyst deactivator may be added in the latter stage of the reaction. Known catalyst deactivators are used effectively as the catalyst deactivator. Out of these, ammonium salts and phosphonium salts of sulfonic acid are preferred. Salts of dodecylbenzenesulfonic acid such as tetrabutylphosphonium salts of dodecylbenzenesulfonic acid and salts of paratoluenesulfonic acid such as tetrabutylammonium salts of paratoluenesulfonic acid are more preferred.

As the ester of sulfonic acid, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used. Out of these, tetrabutylphosphonium salts of dodecylbenzenesulfonic acid are most preferably used.

When at least one polymerization catalyst selected from alkali metal compounds and/or alkali earth metal compounds is used, the amount of the catalyst deactivator is preferably 0.5 to 50 moles, more preferably 0.5 to 10 moles, much more preferably 0.8 to 5 moles based on 1 mole of the polymerization catalyst.

<characteristic properties of copolycarbonate (2)>

(specific viscosity: $\eta_{sp}$)

The specific viscosity ($\eta_{sp}$) of the copolycarbonate (2) is preferably 0.23 to 0.60, more preferably 0.25 to 0.55, much more preferably 0.30 to 0.50, particularly preferably 0.35 to 0.45. When the specific viscosity is lower than 0.23, the strength of an injection molded piece may degrade and when the specific viscosity is higher than 0.60, injection moldability may deteriorate.

The specific viscosity is obtained from a solution prepared by dissolving 0.7 g of the polycarbonate copolymer in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride and "t" is the number of seconds required for the dropping of a sample solution]

The measurement of the specific viscosity may be carried out by the following procedure. The polycarbonate copolymer is first dissolved in methylene chloride in an amount which is 20 to 30 times the weight of the polycarbonate copolymer, soluble matter is collected by cerite filtration, the solution is removed, and the residue is fully dried to obtain a methylene chloride-soluble solid. The specific viscosity at 20°C is obtained from a solution prepared by dissolving 0.7 g of the solid in 100 ml of methylene chloride by using an Ostwald viscometer.

(glass transition temperature:Tg)

The glass transition temperature (Tg) of the copolycarbonate (2) is preferably 70 to 160°C, more preferably 80 to 160°C, much more preferably 90 to 150°C, particularly preferably 100 to 140°C. When the glass transition temperature (Tg) falls within the above range and the copolycarbonate is used as a molded product, especially an optical molded product, heat resistance becomes satisfactory and injection moldability becomes high advantageously. The glass transition temperature (Tg) is measured at a temperature elevation rate of 20°C/minby using the 2910 DSC of TA Instruments Japan.

(saturation water absorption coefficient)

The saturation water absorption coefficient of the copolycarbonate (2) is preferably not more than 2.5 %, more preferably not more than 2.2 %. When the saturation water absorption coefficient is not more than 2.5 %, the deterioration of various physical properties such as a dimensional change and warpage caused by the water absorption of a molded

product rarely occurs advantageously.

The relationship between the glass transition temperature (Tg°C) and the water absorption coefficient (Wa%) of the copolycarbonate (2) satisfies preferably the following expression (I), more preferably the following expression (I-a). When the following expression (I) is satisfied, a polycarbonate copolymer having excellent heat resistance and a low water absorption coefficient is obtained advantageously. Although the upper limit of the TW value is not particularly limited, a TW value of not more than 10 suffices

$$2.55 \leqq \text{TW value} = Tg \times 0.04 - Wa \qquad (I)$$

$$2.6 \leqq \text{TW value} = Tg \times 0.04 - Wa \qquad (I\text{-}a)$$

(pencil hardness)

Preferably, the copolycarbonate (2) has a pencil hardness of at least F. The pencil hardness is more preferably at least H as the copolycarbonate is excellent in scratch resistance. The pencil hardness can be enhanced by increasing the content of the unit (B2) based on the total of all the recurring units. In the present invention, the pencil hardness is such hardness that when the copolycarbonate (2) is rubbed with a pencil having specific pencil hardness, no scratch mark is left, and pencil hardness used in the surface hardness test of a film which can be measured in accordance with JIS K-5600 is used as an index. The pencil hardness becomes lower in the order of 9H, 8H, 7H, 6H, 5H, 4H, 3H, 2H, H, F, HB, B, 2B, 3B, 4B, 5B and 6B, 9H is the hardest, and 6B is the softest.

(additives)

The copolycarbonate (2) may be mixed with additives such as a heat stabilizer, plasticizer, optical stabilizer, polymerization metal inactivating agent, flame retardant, lubricant, antistatic agent, surfactant, antibacterial agent, ultraviolet absorbent and release agent as required according to purpose. The copolycarbonate (2) may be used in combination with another resin as long as the effect of the present invention is not impaired.

<copolycarbonate (3)>

The copolycarbonate (3) is a polyester carbonate which contains the unit (A) as the main recurring unit and a polyester diol.

The copolycarbonate (3) is a polyester carbonate in which "l" is 1, "m" is 1 and "n" is 1 to 100 in the unit (B) of the copolycarbonate (Z).

The inventors found that a copolycarbonate having a low water absorption coefficient and excellent heat resistance and surface hardness is obtained by copolymerizing isosorbide with a polyester diol.

The copolycarbonate (3) contains a unit (A) represented by the following formula and a unit (B3) represented by the following formula as main recurring units, and the ($A/B3_{n=1}$) molar ratio of the unit (A) and the unit ($B3_{n=1}$) is 40/60 to 99/1.

(unit (A))

The unit (A) is represented by the following formula as described above.

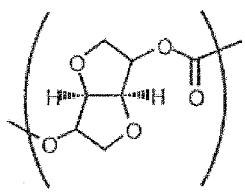

(A)

(unit (B3))

The unit (B3) is represented by the following formula.

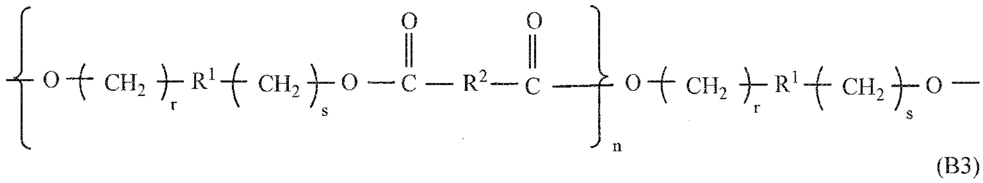

(B3)

$R^1$ is an alkylene group or cycloalkylene group, all of which may be substituted by an aromatic group having 6 to 12 carbon atoms.

The number of carbon atoms of the alkylene group is preferably 2 to 20, more preferably 2 to 10. Examples of the alkylene group include ethylene group, trimethylene group, tetramethylene group, pentamethylene group, hexamethylene group, heptamethylene group, octamethylene group, undecamethylene group and dodecamethylene group. Examples of the aromatic group having 6 to 12 carbon atoms as the substituent include phenyl group and tolyl group.

The number of carbon atoms of the cycloalkylene group is preferably 6 to 12, more preferably 6 to 10. Examples of the cycloalkylene group include cyclohexylene group, cycloheptylene group, cyclooctylene group, cyclononylene group, cyclodecamethylene group, cycloundecylene group and cyclododecylene group. Examples of the aromatic group having 6 to 12 carbon atoms as the substituent include phenyl group and tolyl group.

$R^2$ is an alkylene group, cycloalkylene group or arylene group, all of which may be substituted by an aromatic group having 6 to 12 carbon atoms. The number of carbon atoms of the alkylene group is preferably 4 to 20, more preferably 4 to 10. Examples of the alkylene group include tetramethylene group, pentamethylene group, hexamethylene group, heptamethylene group, octamethylene group, undecamethylene group and dodecamethylene group. Examples of the aromatic group having 6 to 12 carbon atoms as the substituent include phenyl group and tolyl group.

The number of carbon atoms of the cycloalkylene group is preferably 6 to 20, more preferably 6 to 10. Examples of the cycloalkylene group include cyclohexylene group, cycloheptylene group, cyclooctylene group, cyclononylene group, cyclodecamethylene group, cycloundecylene group and cyclododecylene group. Examples of the aromatic group having 6 to 12 carbon atoms as the substituent include phenyl group and tolyl group.

Examples of the arylene group include phenylene group and naphthalenediyl group.

$R^2$ is preferably the residue of at least one compound selected from the group consisting of adipic acid, sebacic acid, 1,4-cyclohexanedicarboxylic acid, terephthalic acid and isophthalic acid.

"r" and "s" are each independently an integer of 0 to 4, preferably 0 to 2.

"n" is an integer of 1 to 100, preferably 1 to 50, more preferably 1 to 20.

The unit (B3) is preferably a polyester diol represented by the following formula (B3a).

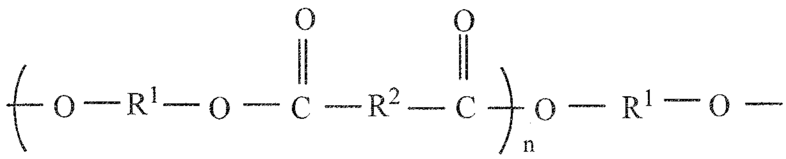

(B3a)

(In the formula, $R^1$ is an alkylene group having 2 to 20 carbon atoms or cycloalkylene group having 6 to 20 carbon atoms, all of which may be substituted by an aromatic group having 6 to 12 carbon atoms. $R^2$ is an alkylene group having 4 to 20 carbon atoms, or cycloalkylene group or arylene group having 6 to 20 carbon atoms, all of which may be substituted by an aromatic group having 6 to 12 carbon atoms.)

The unit (B3) is a carbonate unit derived from a polyester diol containing a dicarboxylic acid component and a diol component as constituent components.

The preferred dicarboxylic acid is an aliphatic carboxylic acid having 4 to 20 carbon atoms, aromatic carboxylic acid or aromatic aliphatic carboxylic acid. It is preferably at least one dicarboxylic acid selected from the group consisting of 2,2-dimethylmalonic acid, succinic acid, glutaric acid, adipic acid, pimelic acid, sebacic acid, suberic acid, azelaic acid, 1,4-cyclohexanedicarboxylic acid, orthophthalic acid, phthalic anhydride, naphthalic acid, biphenyldicarboxylic acid, hexahydrophthalic acid, 5-methylisophthalic acid, terephthalic acid and isophthalic acid. It is particularly preferably at least one dicarboxylic acid selected from the group consisting of adipic acid, sebacic acid, 1, 4-cyclohexanedicarboxylic acid, terephthalic acid and isophthalic acid. These dicarboxylic acid components may be used alone or in combination of two or more.

The preferred diol component is a linear aliphatic diol, branched aliphatic diol or alicyclic diol.

Examples of the linear aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, hydrogenated dilinoleyl glycol and hydrogenated dioleyl glycol. Out of these, 1,3-propanediol, 1,4-butanediol, 1,6-hexanediol and 1,10-decanediol are preferred.

Examples of the branched aliphatic diol include 1,3-butylene glycol, 2-methyl-1,3-propanedi.ol, neopentyl glycol, 2-ethyl-1,6-hexanediol, 2,2,4-trimethyl-1,6-hexanediol, 3-methyl-1,5-pentanediol, 2-n-butyl-2-ethyl-1,3-propanediol, 2,2-diethyl-1,3-propanediol, 2,4-diethyl-1,5-pentanediol, 1,2-hexane glycol, 1,2-octyl glycol, 2-ethyl-1,3-hexanediol, 2,3-diisobutyl-1,3-propanediol, 2,2-diisoamyl-1,3-propanediol, 2-methyl-2-propyl-1,3-propanediol, glycerin, trimethylolpropane and pentaerythritol. Out of these, 3-methyl-1,5-pentanediol, 2-n-butyl-2-ethyl-1,3-propanediol, 2.2-diethyl-1,3-propanediol and 2,4-diethyl-1,5-pentanediol are preferred.

Examples of the alicyclic diol include cyclohexanediols such as 1,2-cyclohexanediol, 1,3-cyclohexanediol, 1,4-cyclohexanediol and 2-methyl-1,4-cyclohexanediol; cyclohexanedimethanols such as 1,2-cyclohexanedimethanol, 1,3-cyclohexanedimethanol and 1,4-cyclohexanedimethanol; norbornanedimethanols such as 2,3-norbornanedimethanol and 2,5-norbornanedimethanol; and tricyclodecanedimethanol, pentacyclopentadecanedimethanol, 1,3-adamantanediol, 2,2-adamantanediol, decalindimethanol, 2,2,4,4-tetramethyl-1,3-cyclobutanediol, isosorbide and 3,9-bis(2-hydroxy-1,1-dimethylethyl)-2,4,8,10-tetraoxaspiro[5.5]undecane. Out of these, 1,4-cyclohexanedimethanol, tricyclodecanedimethanol and 3,9-bis(2-hydroxy-1,1-dimethylethyl)-2,4,8,10-tetraoxaspiro[5.5]undecane are preferred. Polycaprolactone diols and diols containing polylactic acid may be used as the preferred polyester diol except for B3.

These diol compounds may be used alone or in combination of two or more.

(composition)

The main recurring units of the copolycarbonate (3) consist of the unit (A) and the unit (B3) . The expression "main" means that the total content of these units is preferably 60 mol%, more preferably 70 mol%, much more preferably 80 mol% based on the total of all the recurring units.

The ($A/B3_{n=1}$) molar ratio of the unit (A) and the unit ($B3_{n=1}$) in the copolycarbonate (3) is 40/60 to 99/1. When the ($A/B3_{n=1}$) molar ratio is 40/60 to 99/1, the copolycarbonate has high pencil hardness, high heat resistance and very low water absorption.

The ($A/B3_{n=1}$) molar ratio is preferably 60/40 to 98/2, more preferably 70/30 to 97.5/2.5, much more preferably 80/20 to 97.5/2.5, particularly preferably 90/10 to 97.5/2.5. When the ($A/B3_{n=1}$) molar ratio is lower than 40/60, heat resistance degrades and when the ($A/B3_{n=1}$) molar ratio is higher than 99/1, the water absorption coefficient becomes high and flowability degrades. The (A/B3) molar ratio can be calculated by measuring with the proton NMR of JNM-AL400 of JEOL Ltd.

The weight average molecular weight of the unit (B3) is preferably 100 to 3,000, more preferably 200 to 2,000, much more preferably 300 to 1,000.

(another comonomer)

Another diol except for the unit (A) and the unit (B3) may be copolymerized. The other component is the above-described linear aliphatic diol compound, branched aliphatic diol compound or alicyclic diol compound.

<production process of copolycarbonate (3)>

The copolycarbonate (3) can be produced by (i) reacting a dicarboxylic acid (y) represented by the following formula with a diol (x) represented by the following formula to produce a polyester diol (b3) represented by the following formula and having a weight average molecular weight of 100 to 3, 000, and (ii) reacting the obtained polyester diol (b3) with a diol (a) represented by the following formula and a carbonate precursor.

$HOOC\text{-}R^2\text{-}COOH$ (y)

$$HO \left( CH_2 \right)_r R^1 \left( CH_2 \right)_s OH \qquad (x)$$

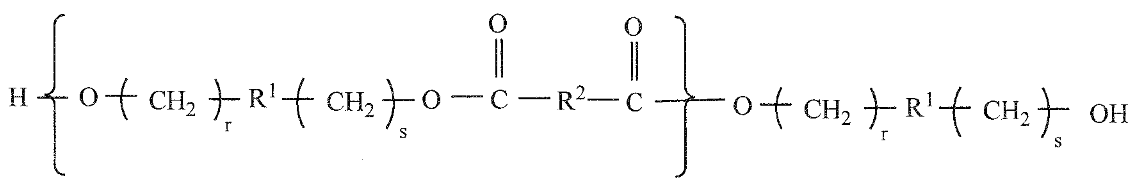

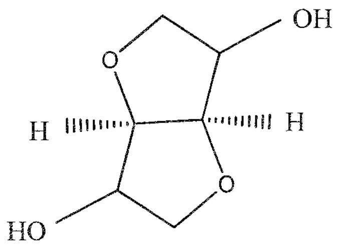

(b3)

(a)

(i) Production of polyester diol (b3)

The polyester diol (b3) is produced by reacting a dicarboxylic acid (y) with a diol (x).

A metal-based catalyst used for the production of the polyester diol (b3) is selected from Lewis acid, a carboxylate salt of an alkali metal or an alkali earth metal, protonic acid, activated white clay, acid white clay and ion exchange resin. Specific examples of the metal-base catalyst include tetrabutoxy titanate, dibutyltin oxide, manganese acetate, cobalt acetate, zinc acetate, zinc benzoate, lithium acetate, sodium acetate, magnesium acetate, calcium acetate, antimony oxide, germanium oxide, phosphoric acid, boric acid, sulfuric acid, p-toluenesulfonic acid, metasulfonic acid and Amberlyst E15. The amount of the catalyst is 10 to 5, 000 μg, preferably 50 to 1,000 μg based on the raw material polyalkylene terephthalate.

The reaction temperature for carrying out the transesterification reaction is generally 150 to 300°C, preferably 200 to 250°C. The pressure is not limited but generally normal pressure to 1 MPa. The reaction time of the transesterification reaction is not particularly limited but generally 0.5 to 5 hours. The transesterification reaction may be carried out in a batch, semi-batch or continuous manner.

A glycol component by-produced by the transesterification reaction is distilled off as required. Thereby, the hydroxyl number and viscosity of the polyester diol can be adjusted to predetermined ranges. Although there are no limiting conditions for distilling off the glycol component, the glycol component is generally distilled off under heating and reduced pressure. Although the glycol component may be distilled off while the reaction is carried out in the presence of a transesterification reaction catalyst or after the end of the reaction, it is preferably distilled off during the reaction because it is possible to control the ratio of the acid component and the glycol component during the reaction. The temperature for distilling off the glycol is generally 150 to 300°C, preferably 200 to 250°C. The pressure is generally 0.5 to 0.0001 Mpa, preferably 0.1 to 0.001 Mpa.

Impurities such as metals may be removed from the obtained polyester diol (b2). It is particularly preferred to remove metals such as antimony and germanium by using an adsorbent. Further, when the catalyst used for transesterification remains in the diol, hydrolyzability and thermal stability deteriorate. Therefore, the catalyst may be removed by using an adsorbent, or a catalyst which is hydrolyzed by water to become a compound insoluble in a diol, such as tetrabutoxy titanate, may be removed by adding water to hydrolyze it so as to precipitate it and separating it by filtration.

The polyester diol may be acquired as a reagent or industrially, and commercially available products thereof include the Polylite (registered trademark) series of DIC Corporation, the Nipporan (registered trademark) series of Nippon Polyurethane Industry Co., Ltd. And the MAXIMOL (registered trademark) series of Kawasaki Kasei Chemicals.

The weight average molecular weight of the polyester diol (b3) is preferably 100 to 3,000, more preferably 200 to 2,500, much more preferably 300 to 2,000, particularly preferably 400 to 1,500, most preferably 450 to 1,000. When the weight average molecular weight of the polyester diol is lower than 100, the acid value tends to become large, thereby affecting a polymerization reaction and reducing productivity. When the weight average molecular weight of the polyester diol (b3) is higher than 3,000, phase separation tends to occur.

The acid value of the polyester diol (b3) is preferably not more than 1 mgKOH/g, more preferably not more than 0.3 mgKOH/g. When the acid value is larger than 1 mgKOH/g, it may affect a polymerization reaction, thereby reducing productivity.

(ii) Production of copolycarbonate (3)

The copolycarbonate (3) is produced by reacting the obtained polyester diol (b3) with a diol (a) and a carbonate precursor.

A transesterification reaction using a diester carbonate as the carbonate precursor is carried out by stirring the diol and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is completed while the formed alcohol or phenol is distilled off by setting a reduced pressure from the beginning. An end sealing agent and an antioxidant may be added as required.

The diester carbonate used in the above transesterification reaction is an ester such as an aryl group or aralkyl

group having 6 to 12 carbon atoms which may be substituted. Specific examples thereof include diphenyl carbonate, ditolyl carbonate, bis(chlorophenyl)carbonate and m-cresyl carbonate. Out of these, diphenyl carbonate is particularly preferred. The amount of diphenyl carbonate is preferably 0.97 to 1.10 moles, more preferably 1.00 to 1.06 moles based on 1 mole of the total of the dihydroxy compounds.

To increase the polymerization rate in the melt polymerization method, a polymerization catalyst may be used, as exemplified by an alkali metal compound, an alkali earth metal compound, a nitrogen-containing compound and a metal compound.

As the above compounds, organic acid salts, inorganic salts, oxides, hydroxides, hydrides, alkoxides and quaternary ammonium hydroxides of an alkali metal or an alkali earth metal are preferably used, and these compounds may be used alone or in combination.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogenphosphate, dipotassium hydrogenphosphate, dilithium hydrogenphosphate, disodium phenylphosphate, disodium salts, dipotassium salts, dicesium salts and dilithium salts of bisphenol A, and sodium salts, potassium salts, cesium salts and lithium salts of phenol.

Examples of the alkali earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate and barium diacetate .

Examples of the nitrogen-containing compound include quaternary ammonium hydroxides having an alkyl or aryl group such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used.

Examples of the metal compound include zinc aluminum compounds, germanium compounds, organic tin compounds, antimony compounds, manganese compounds, titanium compounds and zirconium compounds. These compounds may be used alone or in combination of two or more.

The amount of the polymerization catalyst is preferably 1 x $10^{-9}$ to 1 x $10^{-2}$ equivalent, more preferably 1 x $10^{-8}$ to 1 x $10^{-3}$ equivalent, much more preferably 1 x $10^{-7}$ to 1 x $10^{-5}$ equivalent based on 1 mole of the diol component.

A catalyst deactivator may be added in the latter stage of the reaction. Known catalyst deactivators are used effectively as the catalyst deactivator. Out of these, ammonium salts and phosphonium salts of sulfonic acid are preferred. Salts of dodecylbenzenesulfonic acid such as tetrabutylphosphonium salts of dodecylbenzenesulfonic acid and salts of paratoluenesulfonic acid such as tetrabutylammonium salts of paratoluenesulfonic acid are more preferred.

As the ester of sulfonic acid, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used. Out of these, tetrabutylphosphonium salts of dodecylbenzenesulfonic acid are most preferably used.

When at least one polymerization catalyst selected from alkali metal compounds and/or alkali earth metal compounds is used, the amount of the catalyst deactivator is preferably 0.5 to 50 moles, more preferably 0.5 to 10 moles, much more preferably 0.8 to 5 moles based on 1 mole of the polymerization catalyst.

<characteristic properties of copolycarbonate (B3)>

(specific viscosity: $\eta_{sp}$)

The specific viscosity ($\eta_{sp}$) of the copolycarbonate (B3) is preferably 0.23 to 0. 60, more preferably 0.25 to 0.55, much more preferably 0.30 to 0.50, particularly preferably 0.35 to 0.45. When the specific viscosity is lower than 0.23, the strength of an injection molded piece may degrade and when the specific viscosity is higher than 0.60, injection moldability may deteriorate.

The specific viscosity is obtained from a solution prepared by dissolving 0.7 g of the polyester carbonate resin in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride and "t" is the number of seconds required for the dropping of a sample solution]

The measurement of the specific viscosity may be carried out by the following procedure. The polyester carbonate resin is first dissolved in methylene chloride in an amount which is 20 to 30 times the weight of the polyester carbonate resin, soluble matter is collected by cerite filtration, the solution is removed, and the residue is fully dried to obtain a methylene chloride-soluble solid. The specific viscosity at 20°C is obtained from a solution prepared by dissolving 0.7 g of the solid in 100 ml of methylene chloride by using an Ostwald viscometer.

(glass transition temperature: Tg)

The glass transition temperature (Tg) of the copolycarbonate (B3) is preferably 70 to 160°C, more preferably 80 to 160°C, much more preferably 90 to 150°C, particularly preferably 100 to 140°C. When the glass transition temperature (Tg) falls within the above range, the heat resistance of a molded product (especially when it is used as an optical molded product) becomes satisfactory and injection moldability becomes high advantageously. The glass transition temperature (Tg) is measured at a temperature elevation rate of 20°C/min by using the 2910 DSC of TA Instruments Japan.

(saturation water absorption coefficient)

The saturation water absorption coefficient of the copolycarbonate (B3) is preferably not more than 2.5%, more preferably not more than 2.2 %. When the saturation water absorption coefficient is lower than 2.5%, the deterioration of various physical properties such as a dimensional change and warpage caused by the water absorption of a molded product rarely occurs advantageously.

The relationship between the glass transition temperature (Tg°C) and the water absorption coefficient (Wa%) of the copolycarbonate (B3) satisfies preferably the following expression (I), more preferably the following expression (I-a). When the following expression (I) is satisfied, a polyester carbonate resin having excellent heat resistance and a low water absorption coefficient is obtained advantageously. Although the upper limit of the TW value is not particularly limited, a TW value of not more than 10 suffices.

$$2.5 \leqq \text{TW value} = Tg \times 0.04 - Wa \qquad (I)$$

$$2.6 \leqq \text{TW value} = Tg \times 0.04 - Wa \qquad (I\text{-}a)$$

(pencil hardness)

Preferably, the copolycarbonate (B3) has a pencil hardness of at least F. The pencil hardness is more preferably at least H as the copolycarbonate is excellent in scratch resistance. The pencil hardness can be enhanced by increasing the content of the unit (B3) based on the total of all the recurring units. In the present invention, the pencil hardness is such hardness that when the copolycarbonate (B3) is rubbed with a pencil having specific pencil hardness, no scratch mark is left, and pencil hardness used in the surface hardness test of a film which can be measured in accordance with JIS K-5600 is used as an index. The pencil hardness becomes lower in the order of 9H, 8H, 7H, 6H, 5H, 4H, 3H, 2H, H, F, HB, B, 2B, 3B, 4B, 5B and 6B, 9H is the hardest, and 6B is the softest.

(additives)

The copolycarbonate (3) may be mixed with additives such as a heat stabilizer, plasticizer, optical stabilizer, polymerization metal inactivating agent, flame retardant, lubricant, antistatic agent, surfactant, antibacterial agent, ultraviolet absorbent and release agent as required according to purpose. The copolycarbonate (3) may be used in combination with another resin as long as the effect of the present invention is not impaired.

<molded article>

Molded articles obtained from the copolycarbonate (Z) which includes the copolycarbonates (1) to (3) are formed by an arbitrary method such as an injection molding, compression molding, extrusion molding or solution casting method. Since the copolycarbonate (Z) is excellent in moldability and heat resistance, it can be used as various molded

articles. Especially, it can be advantageously used as a structural material for optical parts such as optical lenses, optical disks, liquid crystal panels, optical cards, sheets, films, optical fibers, connectors, vapor-deposition plastic reflection mirrors and displays and as a molded article suitable for use in electric and electronic parts such as the exteriors and front panels of personal computers and mobile phones, for automobile applications such as car head lamps and windows, for general applications such as cards and miscellaneous goods and for functional materials.

<film>

A film obtained from the copolycarbonate (Z) may be used as a surface protection film, decorating film, front panel, phase difference film, plastic cell substrate film, polarizer protection film, antireflection film, luminance increasing film, optical disk protection film or diffusion film.

To produce an optical film, known methods such as solution casting, melt extrusion, thermal press and calender methods may be employed. Out of these, solution casting and melt extrusion methods are preferred., and the melt extrusion method is particularly preferred from the viewpoint of productivity.

In the melt extrusion method, the copolycarbonate (Z) is preferably extruded by using a T die and supplied to a cooling roll. At this point, the temperature which is determined by the molecular weight, Tg and melt flow property of the copolycarbonate (Z), is preferably 180 to 350°C, more preferably 200 to 320°C. When the temperature is lower than 180°C, viscosity becomes high, whereby the orientation and stress distortion of the polymer tend to remain disadvantageously. When the temperature is higher than 350°C, problems such as thermal deterioration, coloration and a die line from the T die tend to occur.

Since the copolycarbonate (Z) has high solubility in an organic solvent, the solution casting method can also be employed. In the case of the solution casting method, methylene chloride, 1,2-dichloroethane, 1,1,2,2-tetrachloroethane, dioxolan and dioxane are preferably used as solvents. The content of the residual solvent in the film obtained by the solution casting method is preferably not more than 2 wt%, more preferably not more than 1 wt%. When the content of the residual solvent is higher than 2 wt%, the reduction of the glass transition temperature of the film becomes marked, which is not preferred from the viewpoint of heat resistance.

The thickness of an unstretched film obtained from the copolycarbonate (Z) is preferably 30 to 400 μm, more preferably 40 to 300 μm. To obtain a phase difference film by stretching the unstretched film, the thickness of the unstretched film may be suitably determined from among the above range in consideration of the desired phase difference value and the thickness of the optical film.

EXAMPLES

The following examples are provided for the purpose of further illustrating the present invention but are in no way to be taken as limiting. "Parts" in the examples means "parts by weight". The resins and the evaluation methods used in the examples are as follows. Examples 1 to 4 are not according to the invention and described for reference and/or comparison only.

1. Polymer composition ratio (NMR)

Each recurring unit was measured by the proton NMR of JNM-AL400 of JEOL Ltd. to calculate the polymer composition ratio (molar ratio).

2. Measurement of specific viscosity

The specific viscosity was obtained from a solution prepared by dissolving 0.7 g of the polycarbonate resin in 100 ml of methylene chloride at 20°C by using an Ostwald viscometer.

$$\text{Specific viscosity } (\eta_{sp}) = (t - t_0)/t_0$$

["to" is the number of seconds required for the dropping of methylene chloride and "t" is the number of seconds required for the dropping of a sample solution]

3. Measurement of glass transition temperature (Tg)

The glass transition temperature (Tg) was measured at a temperature elevation rate of 20°C/min in a nitrogen

atmosphere (nitrogen flow rate: 40 ml/min) by using 8 mg of the polycarbonate resin and the DSC-2910 thermal analyzing system of TA Instruments Japan in accordance with JIS K7121.

4. Water absorption coefficient

The water absorption coefficient was obtained from the following equation by measuring the weight of a cast film having a thickness of 200 μm obtained by dissolving a polycarbonate resin pellet in methylene chloride and evaporating methylene chloride after it was dried at 100°C for 12 hours and immersed in 25°C water for 48 hours.

$$\text{Water absorption coefficient (\%)} = \{(\text{weight of resin after water absorption} - \text{weight of resin before water absorption})/\text{weight of resin before water absorption}\} \times 100$$

5. TW value

The TW value was obtained from the following equation.

$$\text{TW value} = \text{glass transition temperature (Tg)} \times 0.04 - \text{water absorption coefficient (Wa)}$$

6. Pencil hardness

The pellet was molded into a 2 mm-thick square plate at a cylinder temperature of 250°C and a mold temperature of 80°C at a 1-minute cycle by using the J85-ELIII injection molding machine of The Japan Steel Works, Ltd. to measure the pencil hardness of this test specimen in accordance with the substrate testing method of JIS K5600.

7. Measurement of dynamic viscoelasticity

After the obtained resin was dried in vacuum at 100°C for 24 hours, it was molded into a 2 mm-thick plate by using the 75-ton molding machine (JSW J-75EIII) of JSW. The dynamic viscoelasticity of the molded specimen was measured under following conditions to obtain a temperature (Tmax:°C) at which the loss tangent (tanδ) became maximum. Name of apparatus: RDAIII of TA Instruments Japan Specimen: 2.0 mm in thickness x 12.0 mm in width
Measurement temperature: -20 to 100°C
Temperature elevation rate: 2°C/min
Frequency: 10 Hz

8. Low-temperature planar impact

A 2 mm-thick square plate was used to carry out a low-temperature planar impact test 10 times at a testing temperature of -20°C, a testing speed of 7 m/sec, a striker diameter of 1/2 inch and a receptor diameter of 1 inch by using the SHIMADZU HYDROSHOTHITS-P10 high-speed impact tester (of Shimadzu Corporation) to evaluate the probability that the specimen became fragile and 50 % breaking energy (average value).

9. Number average molecular weight of polycarbonate oligomer

The polycarbonate copolymer was dissolved in $CDCl_3$ to calculate the number of terminal hydroxyl groups, the number of terminal phenyl groups and the average number of recurring units by the proton NMR of JNM-AL400 of JEOL Ltd. so as to obtain the number average molecular weight of the polycarbonate oligomer.

Number average molecular weight of polycarbonate oligomer = (integrated value of signals of recurring unit)/(integrated value of signals of terminal hydroxyl group + integrated value of signals of terminal phenyl group) x 2 x molecular weight of recurring unit

10. Average number of repetitions and number average molecular weight of unit (B) in polycarbonate copolymer

The polycarbonate copolymer was dissolved in $CDCl_3$ to be measured by $^{13}$C-NMR of JNM-AL400 of JEOL Ltd. The signal of ISS (isosorbide)-ISS carbonate is measured at 153 to 154 ppm, the signal of ISS-copolymerization diol is generally measured at 154 to 155 ppm, and the signal of copolymerization diol-copolymerization diol is generally measured at 155 to 156 ppm. The average number of repetitions was calculated from the integrated values of these signals. The number average molecular weight of the average recurring unit (B) was obtained by multiplying the average number of repetitions with the molecular weight of the recurring unit.

Average number of repetitions of unit (B) = integrated value of signals of ([unit (B) - unit (B)]/integrated value of signals of [unit (A) - unit (B)] x 2 + 1

11. Weight average molecular weight of polyester diol

The weight average molecular weight of the polyester diol was measured by gel permeation chromatography.

Example 1

436 parts of isosorbide (to be abbreviated as ISS hereinafter), 65 parts of 1,8-octanediol (to be abbreviated as OD hereinafter), 750 parts of diphenyl carbonate (to be abbreviated as DPC hereinafter), and 0.8 x $10^{-2}$ part of tetramethylammonium hydroxide and 0.6 x $10^{-4}$ part of sodium hydroxide as catalysts were heated at 180°C in a nitrogen atmosphere to be molten. Thereafter, the pressure was reduced to 13.4 kPa over 30 minutes. Then, the temperature was raised to 250°C at a rate of 60°C/hr and kept at that temperature for 10 minutes, and the pressure was further reduced to 133 Pa or lower over 1 hour. A reaction was carried out under agitation for a total of 6 hours, and the reaction product was discharged from the bottom of a reactor under nitrogen increased pressure and cut by a pelletizer while it was cooled in a water tank to obtain a pellet after the end of the reaction. The evaluation results are shown in Table 1.

Example 2

The same operation and the same evaluations as in Example 1 were carried out except that 441 parts of ISS, 66 parts of 1, 9-nonanediol (to be abbreviated as ND hereinafter) and 750 parts of DPC were used as raw materials. The results are shown in Table 1.

Example 3

The same operation and the same evaluations as in Example 2 were carried out except that 71 parts of 1,10-decanediol (to be abbreviated as DD hereinafter) was used in place of ND. The results are shown in Table 1.

Example 4

The same operation and the same evaluations as in Example 2 were carried out except that 71 parts of 1, 12-dodecanediol (to be abbreviated as DDD hereinafter) was used in place of ND. The results are shown in Table 1.

Comparative Example 1

The same operation and the same evaluations as in Example 1 were carried out except that 501 parts of ISS

and 749.7 parts of DPC were used as raw materials. The results are shown in Table 1.

Comparative Example 2

The same operation and the same evaluations as in Example 1 were carried out except that 376 parts of ISS, 65 parts of 1,3-propanediol (to be abbreviated as PD hereinafter) and 750 parts of DPC were used as raw materials. The results are shown in Table 1.

Comparative Example 3

The same operation and the same evaluations as in Example 1 were carried out except that 400 parts of ISS, 72 parts of 1,5-pentanediol (to be abbreviated as PeD hereinafter) and 750 parts of DPC were used as raw materials. The results are shown in Table 1.

Comparative Example 4

The same operation and the same evaluations as in Example 1 were carried out except that 425 parts of ISS, 61 parts of 1, 6-hexanediol (to be abbreviated as HD hereinafter) and 750 parts of DPC were used as raw materials. The results are shown in Table 1.

Comparative Example 5

436 parts of ISS, 65 parts of OD, 750 parts of DPC, and 0.8 x $10^{-2}$ part of tetramethylammonium hydroxide and 0.6 x $10^{-4}$ part of sodium hydroxide as catalysts were heated at 180°C in a nitrogen atmosphere to be molten. Thereafter, the pressure was reduced to 13.4 kPa over 30 minutes. Then, the temperature was raised to 250°C at a rate of 60°C/hr and kept at that temperature for 10 minutes, and the pressure was further reduced to 133 Pa or lower over 1 hour. A reaction was carried out under agitation for a total of 3 hours, and the reaction product was discharged from the bottom of a reactor under nitrogen increased pressure and cut by a pelletizer while it was cooled in a water tank to obtain a pellet after the end of the reaction. The evaluation results are shown in Table 1.

Comparative Example 6

The same operation and the same evaluations as in Example 1 were carried out except that 488 parts of ISS, 20 parts of OD and 750 parts of DPC were used as raw materials. The results are shown in Table 1.

Comparative Example 7

The same operation and the same evaluations as in Example 1 were carried out except that 376 parts of ISS, 132 parts of OD and 750 parts of DPC were used as raw materials. The results are shown in Table 1.

Table 1

| | | Composition | Specific viscosity | Tg | Water Absorption Coefficient | TW value | Pencil hardness | Dynamic viscoelasticity | Low-temperature impact test | |
|---|---|---|---|---|---|---|---|---|---|---|
| | | | | | | | | Tmax | Brittle probability | Energy |
| | | | | °C | % | | | °C | % | J |
| Ex. 1 | ISS/OD | 87/13 | 0.403 | 120 | 1.9 | 2.9 | H | -79 | 40 | 22 |
| Ex. 2 | ISS/ND | 89/11 | 0.401 | 121 | 1.8 | 3.0 | H | -90 | 0 | 48 |
| Ex. 3 | ISS/DD | 89/11 | 0.394 | 119 | 1.8 | 3.0 | H | -89 | 10 | 43 |
| Ex. 4 | ISS/DDD | 90/10 | 0.398 | 120 | 1.7 | 3.1 | H | -89 | 10 | 45 |
| C.Ex.1 | ISS | 100 | 0.394 | 160 | 5.3 | 1.1 | H | - | 100 | 2 |
| C.Ex.2 | ISS/PD | 75/25 | 0.382 | 116 | 2.4 | 2.2 | F | -48 | 100 | 4 |
| C.Ex.3 | ISS/PeD | 80/20 | 0.391 | 125 | 2.8 | 2.2 | F | -68 | 100 | 3 |
| C.Ex.4 | ISS/HD | 85/15 | 0.383 | 125 | 3.0 | 2.0 | H | -72 | 100 | 6 |
| C.Ex.5 | ISS/OD | 87/13 | 0.224 | 119 | 1.9 | 2.9 | H | -79 | 100 | 2 |
| C.Ex.6 | ISS/OD | 96/4 | 0.393 | 148 | 3.0 | 2.9 | H | -76 | 90 | 5 |
| C.Ex.7 | ISS/OD | 74/26 | 0.385 | 80 | 1.1 | 2.1 | HB | -80 | 40 | 23 |

Ex.:Example C.Ex.:Comparative Example
ISS: isosorbide OD: 1,8-octanediol
ND: 1,9-nonanediol DD: 1,10-decanediol
DDD: 1,12-dodecanediol PD: 1,3-propanediol
PeD: 1,5-pentanediol HD: 1,6-hexanediol

Example 5

(1) 161 parts of 1,6-hexanediol (to be abbreviated as HD hereinafter), 257 parts of diphenyl carbonate (to be abbreviated as DPC hereinafter) and 0.4 x $10^{-2}$ part of tetramethylammonium hydroxide as a catalyst were heated at 180°C in a nitrogen atmosphere to be molten. Thereafter, the pressure was reduced to 13.4 kPa over 2 hours, the temperature was raised to 200°C over 2 hours, and distilled phenol and uncreated diol were removed at 500 Pa or lower to obtain 190 parts of an HD homopolycarbonate oligomer having a molecular weight of 530 (to be abbreviated as PCHD hereinafter).

(2) 74 parts of the obtained PCHD, 488 parts of isosorbide (to be abbreviated as ISS hereinafter), 750 parts of diphenyl carbonate (to be abbreviated as DPC hereinafter), and 0.8 x $10^{-2}$ part of tetramethylammonium hydroxide and 0.6 x $10^{-4}$ part by weight of sodium hydroxide as catalysts were heated at 180°C in a nitrogen atmosphere to be molten. Thereafter, the pressure was reduced to 13.4 kPa over 30 minutes. Then, the temperature was raised to 245°C at a rate of 60°C/hr and kept at that temperature for 10 minutes, and the pressure was further reduced to 133 Pa or lower over 1 hour. A reaction was carried out under agitation for a total of 6 hours, and the reaction product was discharged from the bottom of a reactor under nitrogen increased pressure and cut by a pelletizer while it was cooled in a water tank to obtain a pellet after the end of the reaction. The evaluation results are shown in Table 2.

Example 6

The same operation and the same evaluations as in Example 5 were carried out except that 129 parts of PCHD and 473 parts of ISS were used. The results are shown in Table 2.

Example 7

The same operation as in Example 5(1) was carried out to obtain 143 parts of a MPD homopolycarbonate oligomer having a molecular weight of 520 (to be abbreviated as PCMPD hereinafter) except that 126 parts of 2-methyl-1,5-pentanediol (to be abbreviated as MPD hereinafter) was used.

Thereafter, the same operation and the same evaluations as in Example 5(2) were carried out except that 74 parts of PCMPD was used in place of PCHD and 694 parts of DPC was used. The results are shown in Table 2.

Example 8

The same operation as in Example 5(1) was carried out to obtain 182 parts of PCHD having a molecular weight of 980 except that 156 parts of HD was used.

Thereafter, the same operation and the same evaluations as in Example 5(2) were carried out except that 85 parts of PCHD (molecular weight of 980) was used in place of PCHD (molecular weight of 530) and 495 parts of ISS was used. The results are shown in Table 2.

Example 9

The same operation as in Example 5(1) was carried out to obtain 193 parts of PCMPD having a molecular weight of 1,020 except that 156 parts of MPD was used.

Thereafter, the same operation and the same evaluations as in Example 5(2) were carried out except that 85 parts of PCMPD was used in place of PCHD and 495 parts of ISS was used. The results are shown in Table 2.

Example 10

The same operation as in Example 5(1) was carried out to obtain 186 parts of a CHDM homopolycarbonate oligomer having a molecular weight of 1,030 (to be abbreviated as PCCHDM hereinafter) except that 187 parts of 1, 4-cyclohexane dimethanol (to be abbreviated as CHDM hereinafter) was used.

Thereafter, the same operation and the same evaluations as in Example 5(2) were carried out except that 127 parts of PCCHDM was used in place of PCHD and 473 parts of ISS was used. The results are shown in Table 2.

Example 11

The same operation as in Example 5(1) was carried out to obtain 240 parts of an ND homopolycarbonate

oligomer having a molecular weight of 530 (to be abbreviated as PCND hereinafter) except that 208 parts of 1,9-nonanediol (to be abbreviated as ND hereinafter) was used.

Thereafter, the same operation and the same evaluations as in Example 5(2) were carried out except that 74 parts of PCMPD was used in place of PCHD. The results are shown in Table 2.

Comparative Example 8

425 parts of ISS, 61 parts of HD, 750 parts of DPC, and 0.8 x $10^{-2}$ part of tetramethylammonium hydroxide and 0.6 x $10^{-4}$ part of sodium hydroxide as catalysts were heated at 180°C in a nitrogen atmosphere to be molten. Thereafter, the inside pressure of a reactor was reduced to 13.3 kPa under agitation to carry out a reaction for 20 minutes while the formed phenol was distilled off. Then, the temperature was raised to 200°C, and the pressure was gradually reduced to carry out the reaction at 4.0 kPa for 25 minutes and further at 215°C for 10 minutes while the phenol was distilled off. Thereafter, the pressure was gradually reduced to further continue the reaction at 2.67 kPa for 10 minutes and at 1.33 kPa for 10 minutes, and when the pressure was reduced to 40 Pa, the temperature was gradually raised to 250°C to carry out the reaction at that temperature and 6.6 Pa for 1 hour. After the end of the reaction, the reaction product was discharged from the bottom of the reactor under nitrogen increased pressure and cut by a pelletizer while it was cooled in a water tank to obtain a pellet. The evaluation results are shown in Table 2.

Comparative Example 9

The same operation and the same evaluations as in Comparative Example 8 were carried out except that 376 parts of ISS, 103 parts of HD and 750 parts of DPC were used as raw materials. The results are shown in Table 2.

Comparative Example 10

The same operation and the same evaluations as in Comparative Example 8 were carried out except that 425 parts of ISS, 61 parts of MPD and 750 parts of DPC were used as raw materials. The results are shown in Table 2.

Comparative Example 11

The same operation and the same evaluations as in Example Comparative Example 8 were carried out except that 355 parts of ISS, 150 parts of CHDM and 750 parts of DPC were used as raw materials. The results are shown in Table 2.

Table 2

| | | Number of repetitions of polycarbonate oligomer | Molecular weight of polycarbonate oligomer(Mn) | Composition | Specific viscosity | Number of repetitions of unit (B) in resin | Molecular weight of unit (B) in resin (Mn) |
|---|---|---|---|---|---|---|---|
| Ex.5 | ISS/PCHD | 3.7 | 530 | 87/13 | 0.392 | 3.5 | 500 |
| Ex.6 | ISS/PCHD | 3.7 | 530 | 79/21 | 0.381 | 3.4 | 490 |
| Ex.7 | ISS/PCMPD | 3.6 | 520 | 87/13 | 0.398 | 3.4 | 490 |
| Ex.8 | ISS/PCHD | 6.8 | 980 | 85/15 | 0.398 | 6.5 | 940 |
| Ex.9 | ISS/PCMPD | 7.1 | 1020 | 85/15 | 0.394 | 6.8 | 980 |
| Ex.10 | ISS/PCCHDM | 6.0 | 1030 | 71/29 | 0.391 | 5.6 | 960 |
| Ex.11 | ISS/PCND | 2.8 | 530 | 90/10 | 0.395 | 2.6 | 490 |
| C.Ex.8 | ISS/HD | - | - | 85/15 | 0.383 | 1.2 | 170 |
| C.Ex.9 | ISS/HD | - | - | 75/25 | 0.384 | 1.3 | 186 |
| C.Ex.10 | ISS/MPD | - | - | 85/15 | 0.381 | 1.1 | 158 |
| C.Ex.11 | ISS/CHDM | - | - | 70/30 | 0.393 | 1.4 | 240 |

Ex.:Example C.Ex.:Comparative Example
ISS: isosorbide
PCHD: 1,6-hexanediol homocarbonate oligomer
PCMPD: 1,4-cyclohexanedimethanol homocarbonate oligomer
PCCHDM:
PCND: 1,9-nonanediol homocarbonate oligomer
HD: 1,6-hexanediol
MPD: 2-methyl-1,5-pentadiol
CHDM: 1,4-cyclohexanedimethanol

Table 2 (continued)

| | Molecular weight of unit (B) in resin (Mn) | Tg °C | Water absorption coefficient % | TW value | Pencil hardness | Dynamic viscoelasticity | Low-temperature impact test | |
|---|---|---|---|---|---|---|---|---|
| | | | | | | Tmax °C | Brittle probability | Energy |
| | | | | | | | % | J |
| Ex. 5 | 500 | 120 | 1.9 | 2.9 | H | -86 | 20 | 34 |
| Ex. 6 | 490 | 102 | 1.3 | 2.8 | H | -87 | 20 | 36 |
| Ex. 7 | 490 | 119 | 1.7 | 3.1 | H | -86 | 20 | 33 |
| Ex. 8 | 940 | 119 | 1.9 | 2.9 | H | -88 | 10 | 43 |
| Ex. 9 | 980 | 122 | 1.7 | 3.2 | H | -86 | 20 | 37 |
| Ex. 10 | 960 | 123 | 1.7 | 3.2 | H | -83 | 20 | 34 |
| Ex. 11 | 490 | 122 | 1.7 | 3.2 | H | -87 | 20 | 39 |
| C.Ex.8 | 170 | 125 | 3.0 | 2.0 | H | -72 | 100 | 6 |
| C.Ex.9 | 186 | 100 | 2.2 | 1.8 | F | -73 | 100 | 5 |
| C.Ex.10 | 158 | 124 | 2.7 | 2.3 | H | -69 | 100 | 3 |
| C.Ex.11 | 240 | 120 | 2.3 | 2.5 | F | - | 80 | 16 |

Ex.:Example C.Ex.:Comparative Example

Example 12

(1) 413 parts of 1,6-hexanediol (to be abbreviated as HD hereinafter), 292 parts of adipic acid and 0.02 part of tetraisopropyl titanate (30 ppm based on the product) were heated at 200°C under normal pressure while nitrogen was circulated to carry out a condensation reaction while water produced by the reaction was distilled off. When the acid value of the product became 20 or less, the degree of vacuum was gradually raised by using a vacuum pump to carry out the reaction for 4 hours so as to obtain 602 parts of polyhexylene adipate diol having a weight average molecular weight of 500 (to be abbreviated as HAA hereinafter).

(2) 74 parts of the obtained HAA, 488 parts of isosorbide (to be abbreviated as ISS hereinafter), 750 parts of diphenyl carbonate (to be abbreviated as DPC hereinafter), and $2.4 \times 10^{-2}$ part of tetramethylammonium hydroxide and $1.8 \times 10^{-4}$ part of sodium hydroxide as catalysts were heated at 180°C in a nitrogen atmosphere to be molten. Thereafter, the pressure was reduced to 13.4 kPa over 30 minutes. Then, the temperature was raised to 245°C at a rate of 60°C/hr and kept at that temperature for 10 minutes, and the pressure was further reduced to 133 Pa or lower over 1 hour. A reaction was carried out under agitation for a total of 6 hours, and the reaction product was discharged from the bottom of a reactor under nitrogen increased pressure and cut by a pelletizer while it was cooled in a water tank to obtain a pellet after the end of the reaction. The evaluation results are shown in Table 3.

Example 13

The same operation and the same evaluations as in Example 12 were carried out except that 122 parts of HAA and 473 parts of ISS were used. The results are shown in Table3.

Example 14

(1) The same operation as in Example 12 (1) was carried out to obtain 600 parts of polymethylpentyl adipate diol having a weight average molecular weight of 520 (to be abbreviated as MPAA hereinafter) except that 413 parts of 2-methyl-1,5-pentanediol (to be abbreviated as MPD hereinafter) was used in place of HD.

(2) Thereafter, the same operation and the same evaluations as in Example 12(2) were carried out except that 74 parts of MPAA was used in place of HAA and 694 parts of DPC was used. The results are shown in Table 3.

Example 15

(1) The same operation as in Example 14 (1) was carried out to obtain 790 parts of MPAA having a weight average molecular weight of 980 except that 315 parts of MPD was used.

(2) Thereafter, the same operation and the same evaluations as in Example 12 (2) were carried out except that 85 parts of MPAA (molecular weight of 980) was used in place of HAA and 495 parts of ISS was used. The results are shown in Table 3.

Example 16

(1) The same operation as in Example 14 (1) was carried out to obtain 620 parts of polymethylpentyl sebacate diol having a weight average molecular weight of 480 (to be abbreviated as MPSA hereinafter) except that 371 parts of sebacic acid was used in place of adipic acid

(2) Thereafter, the same operation and the same evaluations as in Example 12 (2) were carried out except that 85 parts of MPSA (molecular weight of 480) was used in place of HAA and 495 parts of ISS was used. The results are shown in Table 3.

Example 17

(1) The same operation as in Example 12(1) was carried out to obtain 840 parts of polynonyl adipate diol having a weight average molecular weight of 510 (to be abbreviated as NAA hereinafter) except that 608 parts of 1,9-nonanediol (to be abbreviated as ND hereinafter) was used in place of HD.

(2) Thereafter, the same operation and the same evaluations as in Example 12(2) were carried out except that 74 parts of NAA (molecular weight of 510) was used in place of HAA. The results are shown in Table 3.

Example 18

(1) The same operation as in Example 14 (1) was carried out to obtain 640 parts of polymethylpentyl terephthalate diol having a weight average molecular weight of 500 (to be abbreviated as MPTA hereinafter) except that 315 parts of terephthalic acid was used in place of adipic acid.

(2) Thereafter, the same operation and the same evaluations as in Example 12(2) were carried out except that 74 parts of MPTA (molecular weight of 500) was used in place of HAA and 488 parts of ISS was used. The results are shown in Table 3.

Example 19

(1) The same operation as in Example 18 (1) was carried out to obtain 740 parts of polycyclohexane dimethyl terephthalate diol having a weight average molecular weight of 460 (to be abbreviated as MCTA hereinafter) except that 547 parts of 1,4-cyclohexanedimethanol (to be abbreviated as CHDM hereinafter) was used in place of MPD.

(2) Thereafter, the same operation and the same evaluations as in Example 12(2) were carried out except that 560 parts of MCTA (molecular weight of 460) was used in place of HAA and 330 parts of ISS was used. The results are shown in Table 3.

Comparative Example 12

425 parts of ISS, 61 parts of HD, 750 parts of DPC, and $0.8 \times 10^{-2}$ part of tetramethylammonium hydroxide and $0.6 \times 10^{-4}$ part of sodium hydroxide as catalysts were heated at 180°C in a nitrogen atmosphere to be molten. Thereafter, the inside pressure of a reactor was reduced to 13.3 kPa under agitation to carry out a reaction for 20 minutes while the formed phenol was distilled off. Then, the temperature was raised to 200°C, and the pressure was gradually reduced to carry out the reaction at 4.0 kPa for 25 minutes and further at 215°C for 10 minutes while the phenol was distilled off. Thereafter, the pressure was gradually reduced to further continue the reaction at 2.67 kPa for 10 minutes and at 1.33 kPa for 10 minutes, and when the pressure was reduced to 40 Pa, the temperature was gradually raised to 250°C to carry out the reaction at that temperature and 6.6 Pa for 1 hour. After the end of the reaction, the reaction product was discharged from the bottom of the reactor under nitrogen increased pressure and cut by a pelletizer while it was cooled in a water tank to obtain a pellet. The evaluation results are shown in Table 1. The results are shown in Table 3.

Comparative Example 13

Although completely the same operation as in Comparative Example 12 was carried out except that 565 parts of ISS, 564 parts of adipic acid (AA) and 0.02 part of tetraisopropyl titanate as a catalyst (30 ppm based on the product) were used as raw materials, a polymerization reaction did not proceed and only an oligomer having an $\eta_{sp}$ of 0.13 was obtained.

Comparative Example 14

Although completely the same operation as in Example 12 was carried out except that 1,079 parts of HAA and 193 parts of ISS were used, the glass transition temperature was lower than normal temperature and therefore could not be measured. Thus, the heat resistance was low.

Table 3

| | | Molecular weight of polyester diol (Mw) | Composition | Specific viscosity |
|---|---|---|---|---|
| Example 12 | ISS/HAA | 500 | 95.5/4.5 | 0.392 |
| Example 13 | ISS/HAA | 500 | 93/7 | 0.381 |
| Example 14 | ISS/MPAA | 520 | 95.7/4.3 | 0.398 |
| Example 15 | ISS/MPAA | 980 | 97.5/2.5 | 0.398 |
| Example 16 | ISS/MPSA | 480 | 94.8/5.2 | 0.394 |
| Example 17 | ISS/NAA | 510 | 95.6/4.4 | 0.391 |
| Example 18 | ISS/MPTA | 500 | 95.5/4.5 | 0.395 |
| Example 19 | ISS/MCTA | 460 | 65/35 | 0.402 |
| Comparative Example 12 | ISS/HD | - | 85/15 | 0.383 |
| Comparative Example 13 | ISS/AA | - | 50/50 | 0.13 |
| Comparative Example 14 | ISS/HAA | 500 | 38/62 | 0.381 |

ISS: isosorbide
HAA: polyhexylene adipate diol
MPAA: polymethylpentyl adipate diol
MPSA: polymethylpentyl sebacate diol
NAA: polynonyl adipate diol
MPTA: polymethylpentyl terephthalate diol
MCTA: polycyclohexane dimethyl terephthalate diol
HD: 1,6-hexanediol
AA: adipic acid

Table 3 (continued)

| | Tg | Water absorption co-efficient | TW value | Pencil hard-ness | Dynamic visco-elasticity | Low-temperature impact test | |
|---|---|---|---|---|---|---|---|
| | | | | | Tmax | Brittle probability | Energy |
| | °C | % | | | °C | % | J |
| Example 12 | 119 | 2.0 | 2.8 | H | -85 | 20 | 39 |
| Example 13 | 98 | 1.4 | 2.5 | H | -87 | 20 | 41 |
| Example 14 | 121 | 1.9 | 2.9 | H | -84 | 20 | 35 |
| Example 15 | 119 | 2.0 | 2.8 | H | -85 | 20 | 36 |
| Example 16 | 114 | 1.8 | 2.8 | H | -86 | 20 | 37 |
| Example 17 | 115 | 1.8 | 2.8 | H | -89 | 0 | 44 |
| Example 18 | 126 | 2.0 | 3.0 | H | -82 | 30 | 32 |
| Example 19 | 100 | 1.1 | 2.9 | F | -77 | 40 | 23 |
| Comparative Example 12 | 125 | 3.0 | 2.0 | H | -72 | 100 | 6 |
| Comparative Example 13 | - | - | - | - | - | - | - |
| Comparative Example 14 | Lower than normal temperature | - | - | - | - | - | - |

Effect of the Invention

The copolycarbonate (Z) of the present invention has a low water absorption coefficient and is excellent in heat resistance, low-temperature characteristics and surface hardness.

Industrial Applicability

The copolycarbonate (Z) of the present invention is useful as a member for OA, electric and electronic equipment, automobiles and others.

## Claims

1. A copolycarbonate (Z) which contains a unit (A) represented by the following formula and a unit (B) represented by the following formula as main recurring units, the ($A/B_{n=1}$) molar ratio of the unit (A) and the unit ($B_{n=1}$) being 40/60 to 99/1, and the unit ($B_{n=1}$) being a single unit constituting a block.

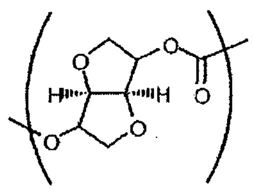

(A)

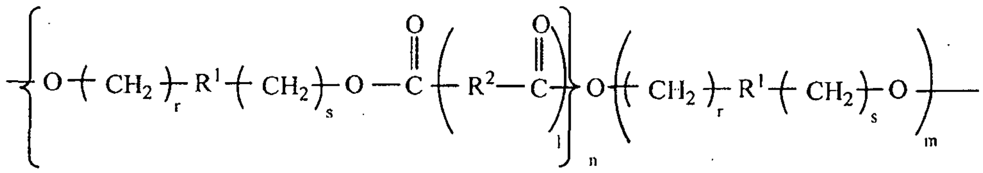

(B)

($R^1$ is an alkylene group or cycloalkylene group, all of which may be substituted by an aromatic group having 6 to 12 carbon atoms. $R^2$ is an alkylene group, cycloalkylene group or arylene group, all of which may be substituted by an aromatic group having 6 to 12 carbon atoms. "r" and "s" are each independently an integer of 0 to 4. "1" is 0; "m" is 0; and "n" is an integer of 2 to 100; or "l" is 1; "m" is 1; and "n" is an integer of 1 to 100.)

2. The copolycarbonate according to claim 1, wherein the unit (B) is a unit (B2) represented by the following formula and the ($A/B2_{n=1}$) molar ratio of the unit (A) and the unit ($B2_{n=1}$) is 40/60 to 95/5.

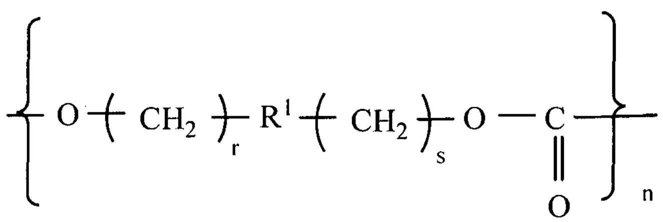

(B2)

($R^1$ is an alkylene group or cycloalkylene group, all of which may be substituted by an aromatic group having 6 to 12 carbon atoms. "r" and "s" are each independently an integer of 0 to 4. "n" is an integer of 2 to 100.)

3. The copolycarbonate according to claim 2, wherein the unit (B2) has a number average molecular weight of 250 to 5,000; the number average molecular weight of unit (B2) being determined as follows:
The polycarbonate copolymer is dissolved in $CDCl_3$ to be measured by $^{13}C$-NMR; the signal of ISS (isosorbide)-ISS carbonate is measured at 153 to 154 ppm, the signal of ISS-copolymerization diol is generally measured at 154 to 155 ppm, and the signal of copolymerization diol-copolymerization diol is generally measured at 155 to 156 ppm; the average number of repetitions is calculated from the integrated values of these signals according to the following equation:

Average number of repetitions of unit (B) = integrated value of signals of ([unit (B) - unit (B)]/integrated value of signals of [unit (A) - unit (B)] x 2 + 1;

the number average molecular weight of the average recurring unit (B2) is obtained by multiplying the average number of repetitions with the molecular weight of the recurring unit.

**4.** The copolycarbonate according to claim 2, wherein the relationship between the glass transition temperature (Tg°C) and the saturation water absorption coefficient (Wa%) satisfies the following expression (I),

$$2.55 \leqq \text{TW value} = Tg \times 0.04 - Wa \quad (I)$$

the glass transition temperature (Tg) being measured by DSC at a temperature elevation rate of 20°C/min and the water absorption coefficient (Wa) being obtained from the following equation by measuring the weight of a cast film having a thickness of 200 μm obtained by dissolving a polycarbonate resin pellet in methylene chloride and evaporating methylene chloride after it was dried at 100°C for 12 hours and immersed in 25°C water for 48 hours:

Water absorption coefficient (%) = {(weight of resin after water absorption - weight of resin before water absorption)/weight of resin before water absorption} x 100.

**5.** The copolycarbonate according to claim 2 which has a 50 % breaking energy measured by a falling weight impact test at -20°C of not less than 20 J and a brittle fracture rate of not more than 50 %; as determined using a 2 mm-thick square plate to carry out a low-temperature planar impact test 10 times at a testing temperature of -20°C, a testing speed of 7 m/sec, a striker diameter of 1/2 inch and a receptor diameter of 1 inch to evaluate the probability that the specimen becomes fragile and 50 % breaking energy (average value).

**6.** A process for producing the copolycarbonate of claim 2, comprising the steps of:

(i) reacting a diol (x) represented by the following formula with a carbonate precursor to produce a carbonate oligomer (b2) represented by the following formula and having a number average molecular weight of 250 to 5,000;
the number average molecular weight of the carbonate oligomer (b2) being calculated by measuring proton NMR; the numbers of the terminal hydroxyl groups and the terminal phenyl groups based on the total number of the recurring units being calculated by proton NMR to calculate the number average molecular weight from the following equation:

Number average molecular weight of carbonate oligomer (b2) = (integrated value of signals of recurring unit)/integrated value of signals of terminal hydroxyl group + integrated value of signals of terminal phenyl group) x 2 x molecular weight of recurring unit;

and
(ii) reacting the obtained carbonate oligomer (b2) with a diol (a) represented by the following formula and a carbonate precursor.

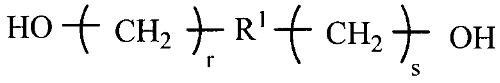
(x)

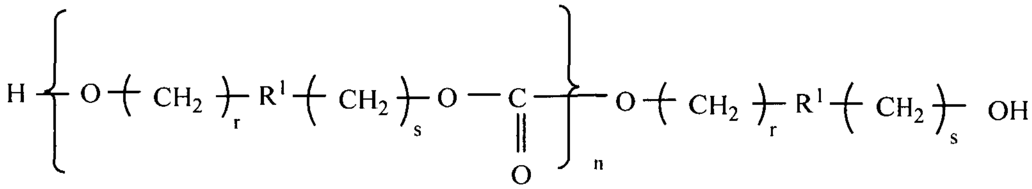
(b2)

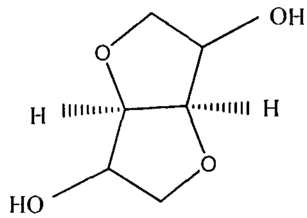
(a)

($R^1$, "r", "s" and "n" in the formulas (x) and (b2) are as defined in the formula (B2).)

**7.** The copolycarbonate according to claim 1, wherein the unit (B) is a unit (B3) represented by the following formula and the ($A/B3_{n=1}$) molar ratio of the unit (A) and the unit ($B3_{n=1}$) is 40/60 to 99/1.

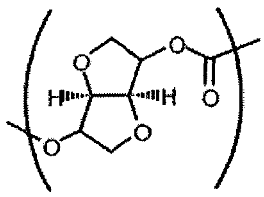
(A)

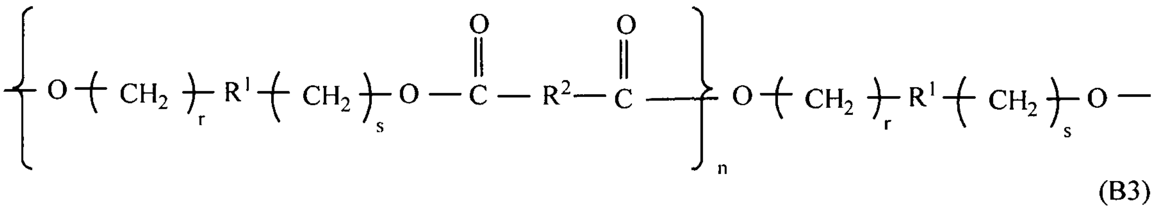
(B3)

($R^1$ is an alkylene group or cycloalkylene group, all of which may be substituted by an aromatic group having 6 to 12 carbon atoms. $R^2$ is an alkylene group, cycloalkylene group or arylene group, all of which may be substituted by an aromatic group having 6 to 12 carbon atoms. "r" and "s" are each independently an integer of 0 to 4. "n" is an integer of 1 to 100.)

**8.** The copolycarbonate according to claim 7, wherein the weight average molecular weight of the unit (B3) is 100 to 3,000; the weight average molecular weight being measured by gel permeation chromatography.

**9.** The copolycarbonate according to claim 7, wherein the unit (B3) is represented by the following formula (B3a).

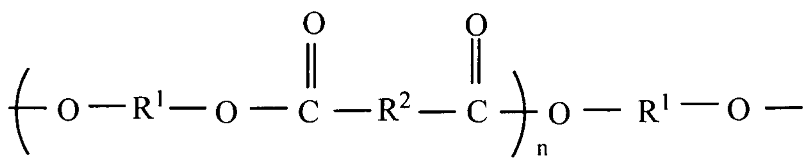
(B3a)

($R^1$ is an alkylene group or cycloalkylene group, all of which may be substituted by an aromatic group having 6 to 12 carbon atoms. $R^2$ is an alkylene group or cycloalkylene group, all of which may be substituted by an aromatic group having 6 to 12 carbon atoms. "n" is an integer of 1 to 100.)

**10.** The copolycarbonate according to claim 7, wherein $R^2$ is the residue of at least one compound selected from the group consisting of adipic acid, sebacic acid, 1,4-cyclohexanedicarboxylic acid, terephthalic acid and isophthalic acid.

**11.** The copolycarbonate according to claim 7 which has a specific viscosity of 0.23 to 0.60; the specific viscosity being obtained from a solution prepared by dissolving 0.7 g of the copolycarbonate in 100 ml of methylene chloride at 20°C by using an Ostwald viscometer and calculated according to the following equation:

$$\text{Specific viscosity } (\eta_{sp}) = (t - t_0)/t_0$$

wherein "$t_0$" is the number of seconds required for the dropping of methylene chloride and "t" is the number of seconds required for the dropping of a sample solution.

**12.** The copolycarbonate according to claim 7, wherein the relationship between the glass transition temperature (Tg°C) and the saturation water absorption coefficient (Wa%) satisfies the following expression (I),

$$2.55 \leqq \text{TW value} = Tg \times 0.04 - Wa \quad (I)$$

the glass transition temperature and the saturation water absorption coefficient being obtained as specified in claim 4.

**13.** The copolycarbonate according to claim 7 which has a 50 % breaking energy measured by a falling weight impact test at -20°C of not less than 20 J and a brittle fracture rate of not more than 50 %; as determined using a 2 mm-thick square plate to carry out a low-temperature planar impact test 10 times at a testing temperature of -20°C, a testing speed of 7 m/sec, a striker diameter of 1/2 inch and a receptor diameter of 1 inch to evaluate the probability that the specimen becomes fragile and 50 % breaking energy (average value).

**14.** A process for producing the copolycarbonate of claim 7, comprising the steps of:

(i) reacting a dicarboxylic acid (y) represented by the following formula with a diol (x) represented by the following formula to produce a polyester diol (b3) represented by the following formula and having a weight average molecular weight of 100 to 3,000; the weight average molecular weight being measured by gel permeation chromatography; and
(ii) reacting the obtained polyester diol (b3) with a diol (a) represented by the following formula and a carbonate precursor.

$$HOOC - R^2 - COOH \qquad (y)$$

$$HO \left( CH_2 \right)_r R^1 \left( CH_2 \right)_s OH \qquad (x)$$

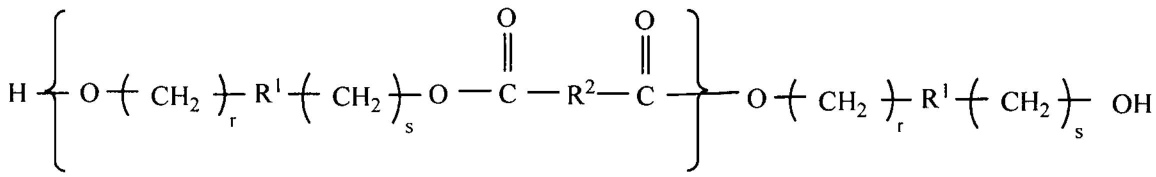

(b3)

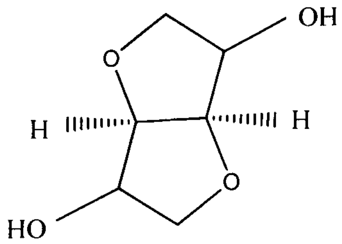

(a)

($R^1$, $R^2$, "r", "s" and "n" in the formulas (y), (x) and (b3) are as defined in the formula (B3).)

**15.** A molded article obtained from the copolycarbonate of any one of claims 1 to 5 and 7 to 13.

**Patentansprüche**

**1.** Copolycarbonat (Z), welches enthält: eine Einheit (A) der folgenden Formel und eine Einheit (B) der folgenden Formel als Hauptwiederholungseinheiten, wobei das molare Verhältnis ($A/B_{n=1}$) der Einheit (A) und der Einheit ($B_{n=1}$) 40/60 bis 99/1 ist und die Einheit ($B_{n=1}$) eine einzelne Einheit ist, die einen Block bildet.

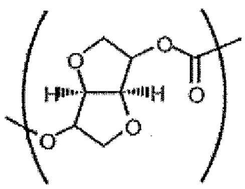

(A)

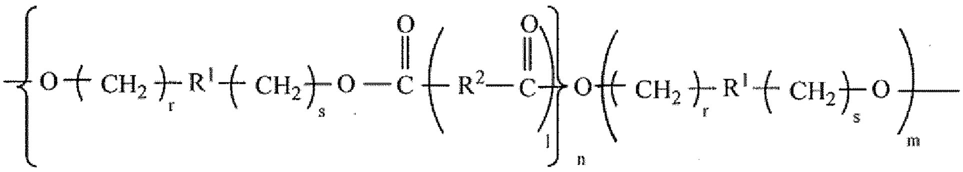

(B)

($R^1$ ist eine Alkylengruppe oder Cycloalkylengruppe, die alle mit einer aromatischen Gruppe mit 6 bis 12 Kohlenstoffatomen substituiert sein können; $R^2$ ist eine Alkylengruppe, Cycloalkylengruppe oder Arylengruppe, die alle mit einer aromatischen Gruppe mit 6 bis 12 Kohlenstoffatomen substituiert sein können; "r" und "s" sind jeweils unabhängig eine ganze Zahl von 0 bis 4; "1" ist 0; "m" ist 0 und "n" ist eine ganze Zahl von 2 bis 100; oder "l" ist 1; "m" ist 1 und "n" ist eine ganze Zahl von 1 bis 100) .

**2.** Copolycarbonat gemäß Anspruch 1, wobei die Einheit (B) eine Einheit (B2) der folgenden Formel ist und das molare Verhältnis ($A/B2_{n=1}$) der Einheit (A) und der Einheit ($B2_{n=1}$) 40/60 bis 95/5 ist

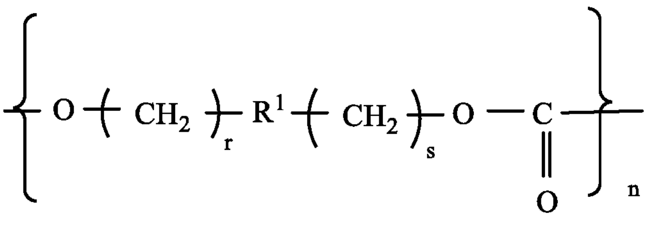

**(B2)**

($R^1$ ist eine Alkylengruppe oder Cycloalkylengruppe, die alle mit einer aromatischen Gruppe mit 6 bis 12 Kohlenstoffatomen substituiert sein können; "r" und "s" sind jeweils unabhängig eine ganze Zahl von 0 bis 4; "n" ist eine ganze Zahl von 2 bis 100).

**3.** Copolycarbonat gemäß Anspruch 2, wobei die Einheit (B2) ein zahlenmittleres Molekulargewicht von 250 bis 5.000 hat; wobei das zahlenmittlere Molekulargewicht der Einheit (B2) wie folgt bestimmt wird: das Polycarbonatcopolymer wird in $CDCl_3$ für Messung mittels $^{13}C$-NMR gelöst; das Signal von ISS (Isosorbid)-ISS-carbonat wird bei 153 bis 154 ppm gemessen, das Signal von ISS-Copolymerisationsdiol wird im Allgemeinen bei 154 bis 155 ppm gemessen und das Signal von Copolymerisationsdiol-Copolymerisationsdiol wird im Allgemeinen bei 155 bis 156 ppm gemessen; die durchschnittliche Anzahl an Wiederholungen wird aus den integrierten Werten dieser Signale gemäß der folgenden Gleichung errechnet:

durchschnittliche Anzahl an Wiederholungen von Einheit (B) = integrierter Wert von Signalen von ([Einheit (B) - Einheit (B)]/integrierter Wert von Signalen von [Einheit (A) - Einheit (B)] x 2 + 1;

das zahlenmittlere Molekulargewicht der durchschnittlichen Wiederholungseinheit (B2) wird durch Multiplizieren der durchschnittlichen Zahl an Wiederholungen mit dem Molekulargewicht der Wiederholungseinheit erhalten.

**4.** Copolycarbonat gemäß Anspruch 2, wobei die Beziehung zwischen der Glasübergangstemperatur (Tg°C) und dem Sättigungswasserabsorptionskoeffizienten (Wa%) dem folgenden Ausdruck (I) genügt

$$2,55 \leqq \text{TW-Wert} = Tg \times 0,04 - Wa \quad (I)$$

wobei die Glasübergangstemperatur (Tg) durch DSC bei einer Temperaturanstiegsgeschwindigkeit von 20°C/min gemessen wird und
wobei der Wasserabsorptionskoeffizient (Wa) erhalten wird anhand der folgenden Gleichung durch Messen des Gewichts eines gegossenen Films mit einer Dicke von 200 µm, erhalten durch Auflösen eines Polycarbonatharzpellets in Methylenchlorid und Verdampfen des Methylenchlorids, nachdem er getrocknet worden ist bei 100°C für 12 Stunden, und 48 Stunden lang bei 25°C in Wasser eingetaucht worden ist:

Wasserabsorptionskoeffizient (%) = {(Gewicht des Harzes nach der Wasserabsorption - Gewicht des Harzes vor der Wasserabsorption)/Gewicht des Harzes vor der Wasserabsorption} x 100;

**5.** Copolycarbonat gemäß Anspruch 2, das eine 50%-Bruchenergie, gemessen durch einen Schlagtest mit einem fallenden Gewicht bei -20°C, von nicht weniger als 20 J und eine spröde Bruchrate von nicht mehr als 50% hat; bestimmt unter Verwendung einer 2 mm-dicken quadratischen Platte, um einen planaren Stoßtest bei niedriger Temperatur 10 mal durchzuführen, und zwar bei einer Testtemperatur von -20°C, einer Testgeschwindigkeit von 7 m/s, einem Schlagkörperdurchmesser von 1,27 cm (1/2 Zoll) und einem Aufnehmerdurchmesser von 2,54 cm (1 Zoll), um die Wahrscheinlichkeit, dass die Probe brüchig wird, und 50% Bruchenergie (Durchschnittswert) zu bestimmen.

**6.** Verfahren zur Herstellung des Polycarbonats gemäß Anspruch 2, umfassend die Schritte:

(i) Umsetzen eines Diols (x), dargestellt durch die folgenden Formel, mit einem Carbonatvorläufer, um ein Carbonatoligomer (b2) herzustellen, das durch die folgende Formel dargestellt wird und das ein zahlenmittleres Molekulargewicht von 250 bis 5.000 hat; wobei das zahlenmittlere Molekulargewicht des Carbonatoligomers (b2) durch Messung des Protonen-NMR errechnet wird; die Anzahl der terminalen Hydroxylgruppen und der

terminalen Phenylgruppen auf der Basis der Gesamtzahl der Wiederholungseinheiten durch Protonen-NMR berechnet wird, um das zahlenmittlere Molekulargewicht aus der folgenden Gleichung zu errechnen:

zahlenmittleres Molekulargewicht des Carbonatoligomers (b2) = (integrierter Wert von Signalen einer Wiederholungseinheit)/integrierter Wert von Signalen einer terminalen Hydroxylgruppe + integrierter Wert von Signalen einer terminalen Phenylgruppe) x 2 x Molekulargewicht der Wiederholungseinheit;

und

(ii) Umsetzen des erhaltenen Carbonatoligomers (b2) mit einem Diol (a), dargestellt durch die folgende Formel und einem Carbonatvorläufer:

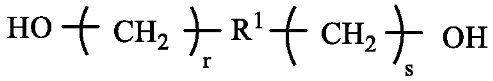

(x)

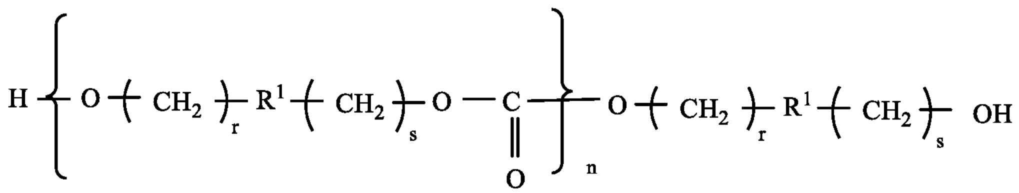

(b2)

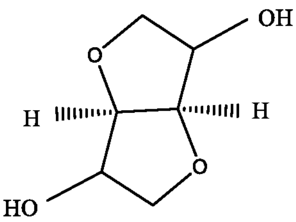

(a)

($R^1$, "r", "s" und "n" in den Formeln (x) und (b2) sind wie in Formel (B2) definiert).

7. Copolycarbonat gemäß Anspruch 1, wobei die Einheit (B) eine Einheit (B3) der folgenden Formel ist und das molare Verhältnis ($A/B3_{n=1}$) der Einheit (A) und der Einheit ($B3_{n=1}$) 40/60 bis 99/1 ist

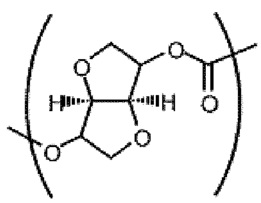

(A)

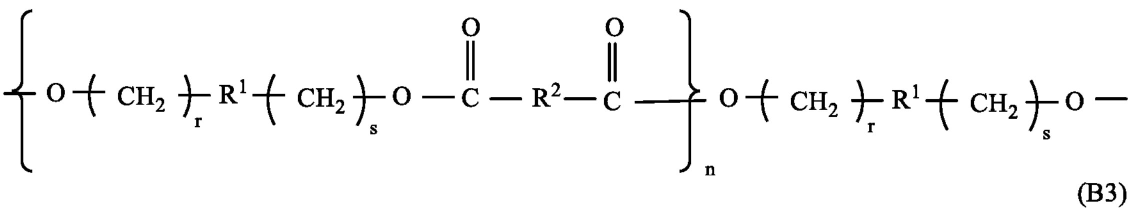

(B3)

($R^1$ ist eine Alkylengruppe oder Cycloalkylengruppe, die alle mit einer aromatischen Gruppe mit 6 bis 12 Kohlenstoffatomen substituiert sein können; $R^2$ ist eine Alkylengruppe, Cycloalkylengruppe oder Arylengruppe, die alle mit einer aromatischen Gruppe mit 6 bis 12 Kohlenstoffatomen substituiert sein können; "r" und "s" sind jeweils unabhängig eine ganze Zahl von 0 bis 4; "n" ist eine ganze Zahl von 1 bis 100).

**8.** Copolycarbonat gemäß Anspruch 7, wobei das gewichtsmittlere Molekulargewicht der Einheit (B3) 100 bis 3.000 ist; wobei das gewichtsmittlere Molekulargewicht durch Gelpermeationschromatographie gemessen wird.

**9.** Copolycarbonat gemäß Anspruch 7, wobei die Einheit (B3) durch die folgende Formel (B3a) dargestellt wird:

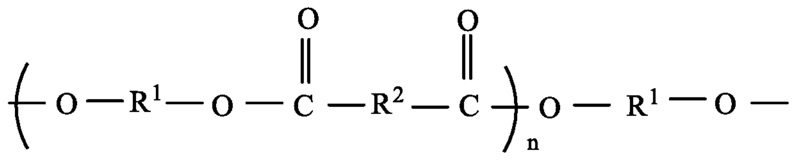

(B3a)

($R^1$ ist eine Alkylengruppe oder Cycloalkylengruppe, die alle mit einer aromatischen Gruppe mit 6 bis 12 Kohlenstoffatomen substituiert sein können; $R^2$ ist eine Alkylengruppe oder Cycloalkylengruppe, die alle mit einer aromatischen Gruppe mit 6 bis 12 Kohlenstoffatomen substituiert sein können; "n" ist eine ganze Zahl von 1 bis 100) .

**10.** Copolycarbonat gemäß Anspruch 7, wobei $R^2$ der Rest wenigstens einer Verbindung, ausgewählt aus der Gruppe, bestehend aus Adipinsäure, Sebacinsäure, 1,4-Cyclohexandicarbonsäure, Terephthalsäure und Isophthalsäure, ist.

**11.** Copolycarbonat gemäß Anspruch 7, das eine spezifische Viskosität von 0,23 bis 0,60 hat; wobei die spezifische Viskosität aus einer Lösung, die hergestellt wird durch Auflösen von 0,7 g des Copolycarbonats in 100 ml Methylenchlorid, bei 20°C unter Verwendung eines Ostwald-Viskosimeter erhalten wird und nach der folgenden Gleichung berechnet wird:

$$\text{spezifische Viskosität } (\eta_{sp}) = (t - t_0)/t_0$$

wobei "$t_0$" die Anzahl der Sekunden ist, die benötigt wird für das Tropfen des Methylenchlorids und "t" die Anzahl der Sekunden ist, die benötigt wird für das Tropfen einer Probelösung.

**12.** Copolycarbonat gemäß Anspruch 7, wobei die Beziehung zwischen der Glasübergangstemperatur (Tg°C) und dem Sättigungswasserabsorptionskoeffizienten (Wa%) dem folgenden Ausdruck (I) genügt.

$$2{,}5 \leqq \text{TW-Wert} = Tg \times 0{,}04 - Wa \qquad (I)$$

wobei die Glasübergangstemperatur und der Sättigungswasserabsorptionskoeffizient erhalten werden, wie es in Patentanspruch 4 spezifiziert ist.

**13.** Copolycarbonat gemäß Anspruch 7, das eine 50%-Bruchenergie, gemessen durch einen Schlagtest mit einem fallenden Gewicht bei -20°C, von nicht weniger als 20 J und eine spröde Bruchrate von nicht mehr als 50% hat; bestimmt unter Verwendung einer 2 mm-dicken quadratischen Platte, um einen planaren Stoßtest bei niedriger Temperatur 10 mal durchzuführen, und zwar bei einer Testtemperatur von -20°C, einer Testgeschwindigkeit von 7 m/s, einem Schlagkörperdurchmesser von 1,27 cm (1/2 Zoll) und einem Aufnehmerdurchmesser von 2,54 cm (1 Zoll), um die Wahrscheinlichkeit, dass die Probe brüchig wird, und 50% Bruchenergie (Durchschnittswert) zu bestimmen.

**14.** Verfahren zur Herstellung des Copolycarbonats gemäß Anspruch 7, umfassend die Schritte:

(i) Umsetzen einer Dicarbonsäure (y), dargestellt durch die folgende Formel, mit einem Diol (x), dargestellt durch die folgende Formel, um ein Polyesterdiol (b3), dargestellt durch die folgende Formel, und ein gewichtsmittleres Molekulargewicht von 100 bis 3.000 aufweisen, herzustellen; wobei das gewichtsmittlere Molekulargewicht durch Gelpermeationschromatographie gemessen wird, und
(ii)Umsetzen des erhaltenen Polyesterdiol (b3) mit einem Diol (a), dargestellt durch die folgende Formel und einem Carbonatvorläufer

$$HOOC - R^2 - COOH \qquad (y)$$

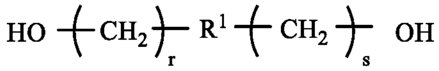
(x)

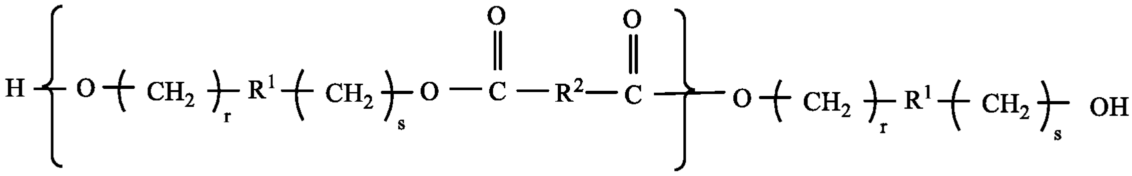
(b3)

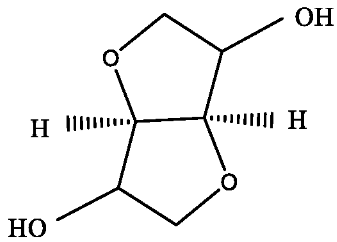
(a)

($R^1$, $R^2$, "r", "s" und "n" in den Formeln (y), (x) und (b3) sind wie in der Formel (B3) definiert).

**15.** Geformter Gegenstand, erhalten aus dem Copolycarbonat gemäß einem der Ansprüche 1 bis 5 und 7 bis 13.

**Revendications**

**1.** Copolycarbonate (Z) qui contient un motif (A) représenté par la formule suivante et un motif (B) représenté par la formule suivante en tant que motifs récurrents principaux, le rapport molaire ($A/B_{n=1}$) entre le motif (A) et le motif ($B_{n=1}$) étant de 40/60 à 99/1, et le motif ($B_{n=1}$) étant un unique motif constituant une séquence.

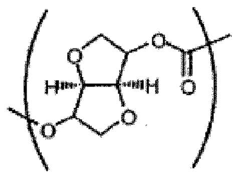
(A)

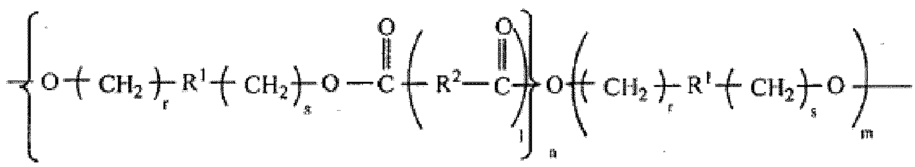
(B)

($R^1$ est un groupe alkylène ou un groupe cycloalkylène, ceux-ci pouvant être substitués avec un groupe aromatique comportant 6 à 12 atomes de carbone. $R^2$ est un groupe alkylène, un groupe cycloalkylène ou un groupe arylène, ceux-ci pouvant être substitués avec un groupe aromatique comportant 6 à 12 atomes de carbone. « r » et « s » sont chacun indépendamment un nombre entier allant de 0 à 4 ; « l » est 0 ; « m » est 0 ; et « n » est un nombre entier allant de 2 à 100 ; ou « l » est 1 ; « m » est 1 ; et « n » est un nombre entier allant de 1 à 100.)

**2.** Copolycarbonate selon la revendication 1, dans lequel le motif (B) est un motif (B2) représenté par la formule

suivante et le rapport molaire ($A/B2_{n=1}$) entre le motif (A) et le motif ($B2_{n=1}$) étant de 40/60 à 95/5.

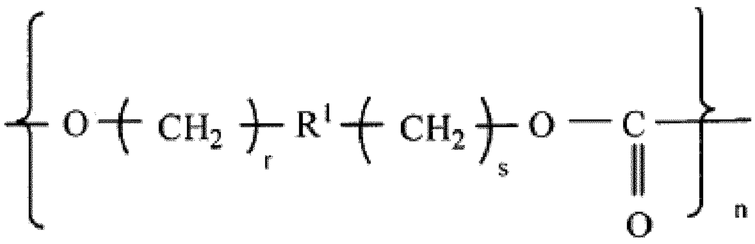

(B2)

($R^1$ est un groupe alkylène ou un groupe cycloalkylène, ceux-ci pouvant être substitués avec un groupe aromatique comportant 6 à 12 atomes de carbone. « r » et « s » sont chacun indépendamment un nombre entier allant de 0 à 4. « n » est un nombre entier allant de 2 à 100.)

**3.** Copolycarbonate selon la revendication 2, dans lequel le motif (B2) présente un poids moléculaire moyen en nombre de 250 à 5000 ; le poids moléculaire moyen en nombre du motif (B2) étant déterminé comme suit :

le copolymère de polycarbonate est dissous dans du $CDCl_3$ pour être mesuré par RMN-$^{13}C$ ; le signal de l'ISS (isosorbide)-carbonate d'ISS est mesuré à 153 à 154 ppm, le signal de l'ISS-diol de copolymérisation est généralement mesuré à 154 à 155 ppm, et le signal de diol de copolymérisation-diol de copolymérisation est généralement mesuré à 155 à 156 ppm ; le nombre moyen de répétitions est calculé à partir des valeurs intégrées de ces signaux selon l'équation suivante :

Nombre moyen de répétitions de motif (B) = valeur intégrée des signaux de ([motif (B) - motif (B)]/valeur intégrée des signaux de [motif (A) - motif (B)] x 2 + 1 ;

le poids moléculaire moyen en nombre du motif récurrent (B2) moyen est obtenu en multipliant le nombre moyen de répétitions par le poids moléculaire du motif récurrent.

**4.** Copolycarbonate selon la revendication 2, dans lequel la relation entre la température de transition vitreuse (Tg°C) et le coefficient d'absorption d'eau de saturation (Wa%) satisfait l'expression (I) suivante,

$$2,55 \leqq \text{Valeur TW} = Tg \times 0,04 - Wa \qquad (I)$$

la température de transition vitreuse (Tg) étant mesurée par DSC à une vitesse d'élévation de température de 20 °C/min et
le coefficient d'absorption d'eau (Wa) étant obtenu à partir de l'équation suivante en mesurant le poids d'un film de coulée ayant une épaisseur de 200 $\mu$m obtenu en dissolvant une pastille de résine de polycarbonate dans du chlorure de méthylène et en évaporant le chlorure de méthylène après séchage à 100 °C pendant 12 heures et immersion dans de l'eau à 25 °C pendant 48 heures :

Coefficient d'absorption d'eau (%) = {(poids de résine après absorption d'eau – poids de résine avant absorption d'eau)/poids de résine avant absorption d'eau} x 100.

**5.** Copolycarbonate selon la revendication 2 qui présente une énergie de rupture à 50 % mesurée par un essai de résistance au choc à -20 °C de pas moins de 20 J et un taux de rupture fragile d'au plus 50 % ; tels que déterminé en utilisant une plaque carrée de 2 mm d'épaisseur pour effectuer un essai de résistance au choc plan à basse température 10 fois à une température d'essai de -20 °C, une vitesse d'essai de 7 m/sec, un diamètre de frappeur de 1,27 cm (1/2 pouce) et un diamètre de récepteur de 2,54 cm (1 pouce) pour évaluer la probabilité que l'éprouvette

devienne fragile et une énergie de rupture à 50 % (valeur moyenne).

**6.** Procédé pour produire le copolycarbonate selon la revendication 2, comprenant les étapes suivantes :

(i) la réaction d'un diol (x) représenté par la formule suivante avec un précurseur de carbonate pour produire un oligomère de carbonate (b2) représenté par la formule suivante et ayant un poids moléculaire moyen en nombre de 250 à 5000 ;
le poids moléculaire moyen en nombre de l'oligomère de carbonate (b2) étant calculé en mesurant la RMN du proton ; les nombres des groupes hydroxyle terminaux et des groupes phényle terminaux sur la base du nombre total des motifs récurrents étant calculés par RMN du proton pour calculer le poids moléculaire moyen en nombre à partir de l'équation suivante :

Poids moléculaire moyen en nombre de l'oligomère de carbonate (b2) = (valeur intégrée des signaux de motif récurrent)/valeur intégrée des signaux de groupe hydroxyle terminal + valeur intégrée de signaux de groupe phényle terminal) x 2 x poids moléculaire du motif récurrent ;

et
(ii) la réaction de l'oligomère de carbonate (b2) obtenu avec un diol (a) représenté par la formule suivante et un précurseur de carbonate.

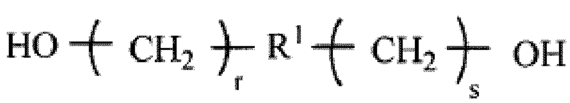

(x)

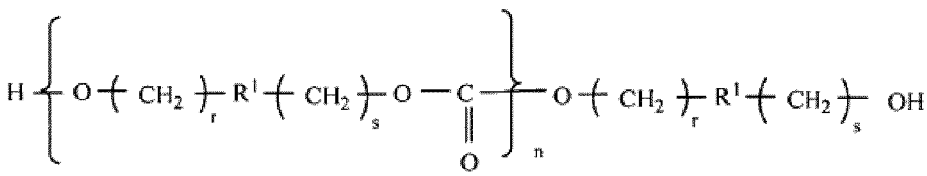

(b2)

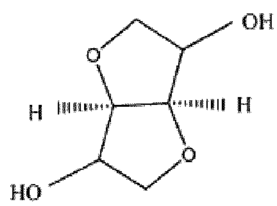

(a)

($R^1$, « r », « s » et « n » dans les formules (x) et (b2) sont tels que définis dans la formule (B2).)

**7.** Copolycarbonate selon la revendication 1, dans lequel le motif (B) est un motif (B3) représenté par la formule suivante et le rapport molaire ($A/B3_{n=1}$) entre le motif (A) et le motif ($B3_{n=1}$) est de 40/60 à 99/1,

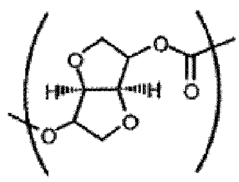

(A)

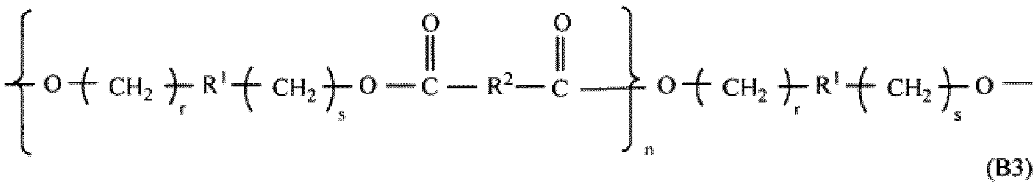

(B3)

($R^1$ est un groupe alkylène ou un groupe cycloalkylène, ceux-ci pouvant être substitués avec un groupe aromatique comportant 6 à 12 atomes de carbone. $R^2$ est un groupe alkylène, un groupe cycloalkylène ou un groupe arylène, ceux-ci pouvant être substitués avec un groupe aromatique comportant 6 à 12 atomes de carbone. « r » et « s » sont chacun indépendamment un nombre entier allant de 0 à 4. « n » est un nombre entier allant de 1 à 100.)

**8.** Copolycarbonate selon la revendication 7, dans lequel le poids moléculaire moyen en poids du motif (B3) est de 100 à 3000 ; le poids moléculaire moyen en poids étant mesuré par chromatographie par perméation sur gel.

**9.** Copolycarbonate selon la revendication 7, dans lequel le motif (B3) est représenté par la formule (B3a) suivante.

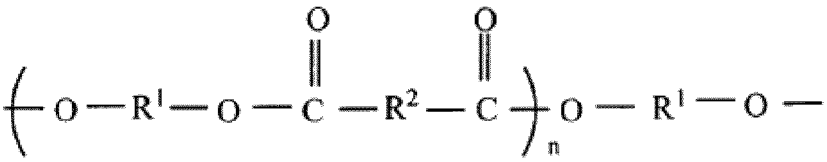

(B3a)

($R^1$ est un groupe alkylène ou un groupe cycloalkylène, ceux-ci pouvant être substitués avec un groupe aromatique comportant 6 à 12 atomes de carbone. $R^2$ est un groupe alkylène ou un groupe cycloalkylène, ceux-ci pouvant être substitués avec un groupe aromatique comportant 6 à 12 atomes de carbone. « n » est un nombre entier allant de 1 à 100.)

**10.** Copolycarbonate selon la revendication 7, dans lequel $R^2$ est le résidu d'au moins un composé sélectionné dans le groupe constitué de l'acide adipique, de l'acide sébacique, de l'acide 1,4-cyclo-hexanedicarboxylique, de l'acide téréphtalique et de l'acide isophtalique.

**11.** Copolycarbonate selon la revendication 7 qui présente une viscosité spécifique de 0,23 à 0,60 ; la viscosité spécifique étant obtenue à partir d'une solution préparée en dissolvant 0,7 g du copolycarbonate dans 100 ml de chlorure de méthylène à 20 °C à l'aide d'un viscosimètre Ostwald et calculée selon l'équation suivante :

$$\text{Viscosité spécifique } (\eta_{sp}) = (t - t_0)/t_0$$

dans laquelle « $t_0$ » est le nombre de secondes requises pour le goutte-à-goutte du chlorure de méthylène et « t » est le nombre de secondes requises pour le goutte-à-goutte d'une solution d'échantillon.

**12.** Copolycarbonate selon la revendication 7, dans lequel la relation entre la température de transition vitreuse (Tg°C) et le coefficient d'absorption d'eau de saturation (Wa%) satisfait l'expression (I) suivante,

$$2{,}55 \leqq \text{Valeur TW} = Tg \times 0{,}04 - Wa \qquad (I)$$

la température de transition vitreuse et le coefficient d'absorption d'eau de saturation étant obtenus comme spécifié dans la revendication 4.

**13.** Copolycarbonate selon la revendication 7 qui présente une énergie de rupture à 50 % mesurée par un essai de résistance au choc à -20 °C de pas moins de 20 J et un taux de rupture fragile d'au plus 50 % ; tels que déterminé en utilisant une plaque carrée de 2 mm d'épaisseur pour effectuer un essai de résistance au choc plan à basse température 10 fois à une température d'essai de -20 °C, une vitesse d'essai de 7 m/sec, un diamètre de frappeur

de 1,27 cm (1/2 pouce) et un diamètre de récepteur de 2,54 cm (1 pouce) pour évaluer la probabilité que l'éprouvette devienne fragile et une énergie de rupture à 50 % (valeur moyenne).

**14.** Procédé pour produire le copolycarbonate selon la revendication 7, comprenant les étapes suivantes :

(i) la réaction d'un acide dicarboxylique (y) représenté par la formule suivante avec un diol (x) représenté par la formule suivante pour produire un polyester diol (b3) représenté par la formule suivante et ayant un poids moléculaire moyen en poids de 100 à 3000 ; le poids moléculaire moyen en poids étant mesuré par chromatographie par perméation sur gel ; et
(ii) la réaction du polyester diol (b3) obtenu avec un diol (a) représenté par la formule suivante et un précurseur de carbonate.

$$HOOC - R^2 - COOH \qquad (y)$$

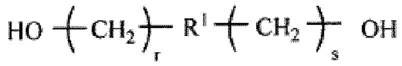
(x)

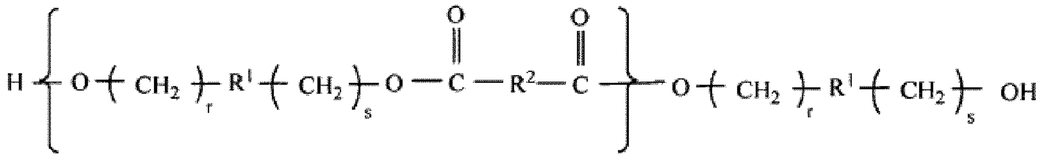
(b3)

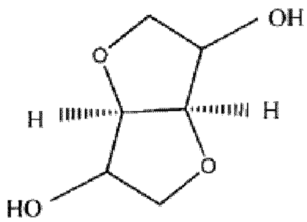
(a)

($R^1$, $R^2$, « r », « s » et « n » dans les formules (y), (x) et (b3) sont tels que définis dans la formule (B3).)

**15.** Article moulé obtenu à partir du copolycarbonate de l'une quelconque des revendications 1 à 5 et 7 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011105846 A
- EP 1752482 A1
- US 2009105393 A1
- WO 2004111106 A
- JP 2008024919 A
- JP 2003292603 A
- JP 2002512268 B
- JP 2001180591 A
- WO 2005116110 A
- WO 2011021720 A